(19) Europäisches Patentamt
European Patent Office
Office européen des brevets

(11) Veröffentlichungsnummer: **0 237 485 B1**

(12) # EUROPÄISCHE PATENTSCHRIFT

(45) Veröffentlichungstag der Patentschrift: **18.01.95**

(51) Int. Cl.$^{6}$: **C08K 5/00**, C08L 27/06, //(C08K5/00,5:34,5:57), (C08K5/00,5:35,5:57)

(21) Anmeldenummer: **87810123.7**

(22) Anmeldetag: **04.03.87**

Die Akte enthält technische Angaben, die nach dem Eingang der Anmeldung eingereicht wurden und die nicht in dieser Patentschrift enthalten sind.

(54) **Stabilisierte Hart-PVC-Zusammensetzungen.**

(30) Priorität: **10.03.86 US 837984**

(43) Veröffentlichungstag der Anmeldung: **16.09.87 Patentblatt 87/38**

(45) Bekanntmachung des Hinweises auf die Patenterteilung: **18.01.95 Patentblatt 95/03**

(84) Benannte Vertragsstaaten: **DE FR GB IT**

(56) Entgegenhaltungen:
**JP-A-59 196 351**
**US-A- 3 840 494**
**US-A- 3 933 741**

**CHEMICAL ABSTRACTS, Band 102, Nr. 16, 22. April 1985, Seite 40, Zusammenfassung133016f, Columbus, Ohio, US; & JP-A-59196 351**

**CHEMICAL ABSTRACTS, Band 96, Nr. 23, 7. Juni 1982, Seite 692, Zusammenfassung199886d; & JP-A-82 24 393**

**Journal of Applied Polymer Science, Vol. 33, 875-884 (1987)**

**"Degradation and Stabilization of PVC", ed. E.D.Owen, ELSEVIER APPLIED SCIENCE PUBLISHER, LONDON and NEW YORK, 244- 245 (1984)**

**"Taschenbuch der Kunststoff-Additive", R.Gächter u. H.Müller, 162-163 (1979),**

**"Taschenbuch der Kunststoff-Additive", R.Gächter u. H.Müller, 2. Auflage, 174-179, 214-217, 199 und 210 (1983)**

**"Taschenbuch der Kunststoff-Additive", R.Gächter u. H.Müller, 2. Auflage, 174-179, 214-217, 199 und 210 (1983)**

(73) Patentinhaber: **CIBA-GEIGY AG**
**Klybeckstrasse 141**
**CH-4002 Basel (CH)**

(72) Erfinder: **Zappia, Jean M.**
**33 Douglas Avenue**
**Yonkers, NY 10703 (US)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

Erfinder: **Capocci, Gerald A.**
**25 Greenway Drive**
**Greenwich, CT 06431 (US)**

## Beschreibung

Die vorliegende Erfindung betrifft stabilisierte Hart-PVC-Zusammensetzungen enthaltend mindestens einen 2,2,6,6-Tetraalkylpiperidin-Lichtstabilisator und mindestens ein Organozinncarboxylat oder -alkoholat.

Hart-Polyvinylchlorid wird für eine Vielzahl von Anwendungen eingesetzt, z.B. für Aussenverkleidungen und Fensterprofile. Hart-PVC wird üblicherweise mit grossen Mengen von Titandioxid, z.B. 12-15 Teile pro 100 Teile PVC, formuliert, um hinreichende Pigmentierung zu gewährleisten und Farbveränderungen durch Bestrahlung durch UV-Licht zu verhindern. Als Hitze- und Verarbeitungsstabilisatoren werden häufig Organozinnmercaptide zugefügt. Die Zugabe einer Kombination von Titandioxid und Zinnmercaptid erlauben die Aussenanwendung des PVC, ohne dass übermässiger Abbau durch Licht, insbesondere UV-Licht, zu beobachten ist. Dies wird von den Herstellern verlangt, die sicherstellen wollen, dass die aus dem PVC hergestellten Artikel für längere Zeit funktionstüchtig bleiben ohne signifikante Farbänderung, veränderte physikalische Eigenschaften oder Abbauerscheinungen.

Diese Systeme zeigen jedoch einige Nachteile. So bewirken die Zinnmercaptide keinen ausreichenden Schutz gegen den durch UV-Licht induzierten Abbau, der bei langdauernder Aussenanwendung notwendig ist. Mischungen von Zinnmercaptiden und Organozinncarboxylaten wurden vorgeschlagen, um diese Schwierigkeiten zu überwinden. Zwar wurde durch solche Kombinationen eine Verbesserung erreicht, aber ein zusätzlichr Schutz bei Langzeitanwendung im Freien ist nach wie vor erwünscht.

Die Verwendung der erwähnten hohen Konzentrationen an Titandioxid führt ebenfalls zu einigen Nachteilen. Vor allem bewirken sie übermässige Abnützung und frühes Versagen, z.B. Risse in bzw. ungleichmässige Abnützung der Extruderwalzen und -schnecken in den PVC-Verarbeitungsmaschinen, was eine teure und häufige Auswechslung der genannten Teile notwendig macht. Ein weiterer bedeutender Nachteil von Hart-PVC mit hohem Titandioxidgehalt besteht darin, dass daraus hergestellte Aussenverkleidungen nur weiss oder pastellfarben sein können. Versuche, den Titandioxidgehalt zu senken, bewirkten eine starke Reduktion der Lichtstabilität des PVC, die sich in unerwünschten Farbänderungen, geringerer Schlagfestigkeit und Zerstörung der Oberfläche bemerkbar macht.

Es wurde auch bereits vorgeschlagen, Piperidin-Lichtschutzmittel in Verbindung mit Organozinnstabilisatoren zur Verbesserung der Eigenschaften von PVC allgemein einzusetzen, wobei jedoch als weitere essentielle Stabilisatoren Bleiverbindungen mitverwendet wurden (siehe C.A•102 : 133016f (1985) and JP-A-59 196 351). Der Einsatz von Bleiverbindungen ist jedoch ebenfalls mit Nachteilen verbunden, nicht zuletzt wegen der ökologischen Probleme, die Bleiverbindungen verursachen. Er führt häufig auch zur Beeinträchtigung den Helligkeit von PVC-Produkten.

Es wurde nun in der erfindungsgegemässen Zusammensetzung überraschenderweise eine Hart-PVC-Zusammensetzung gefunden, die viele der oben erwähnten Nachteile nicht oder in geringerem Masse aufweist. Sie weist bei der Verarbeitung hervorragende Hitzestabilität auf und führt zu Produkten mit erhöhter Langzeitstabilität gegen Lichtabbau. Ausserdem kann die Konzentration an Titandioxid drastisch reduziert werden oder es kann vollständig auf die Zugabe von Titandioxid verzichtet werden, ohne nennenswerten negativen Einfluss auf die Eigenschaften des PVC, aber mit dem Vorteil eines verminderten Verschleisses der Verarbeitungsmaschinen und der Möglichkeit, Produkte auch in dunkleren Farben herzustellen.

Die erfindungsgemässe Hart-PVC-Zusammensetzung ist dadurch gekennzeichnet, dass sie

(A) mindestens eine 2,2,6,6-Tetraalkylpiperidinverbindung, die im Molekül mindestens eine Gruppe der Formel

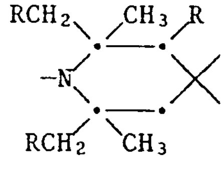 , (I)

enthält, worin R Wasserstoff oder Methyl bedeutet, und

(B) mindestens eine Organozinnverbindung der Formeln

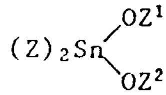

,

$(Z)_2Sn(OOC\text{-}Z^3)_2$ ,

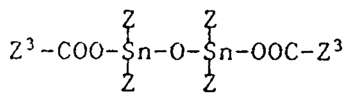

und/oder

$(Z)_mSn(OOC\text{-}CH=CH\text{-}COOZ^4)_{4-m}$ ,

enthält,
worin Z und $Z^4$ unabhängig voneinander $C_1$-$C_{20}$-Alkyl, $C_3$-$C_{20}$-Alkenyl, Cycloalkyl, Aryl, Alkylaryl oder Aralkyl bedeuten, $Z^1$ $C_{10}$-$C_{30}$-Alkyl oder ein- oder zweifach mit $C_8$-$C_{12}$-Alkyl substituiertes Phenyl ist, $Z^2$ für $Z^1$ oder $-Sn(OZ^1)(Z)_2$ steht, $Z^3$ $C_1$-$C_{30}$-Alkyl, $C_3$-$C_{20}$-Alkenyl, Cycloalkyl, Aryl, Aralkyl oder Alkylaryl und m eine Zahl von 1 bis 3 bedeuten, wobei die Zusammensetzung keine Bleiverbindungen enthält.

Die in der erfindungsgemässen Zusammensetzung verwendeten 2,2,6,6-Tetraalkylpiperidinverbindungen sind als Lichtstabilisatoren in vielen Substraten bekannt. Siehe z.B. US-A 3,542,729, 3,547,874, 3,640,928, 3,840,494, 4,021,432, 4,049,647, 4,064,102, 4,086,204 und 4,265,805, worin einige typische Piperidin-Lichtstabilisatoren beschrieben sind.

In dem "Handbuch der Kunststoff-Additive", R.Gächter und H.Müller, 2.Auflage, 1983 (Seite 178, Tabelle 28) wird eine Kombination einer 2,2,6,6-Tetramethylpiperidyl-Verbindung mit einem Organozinncarboxylat in Hart-PVC beschrieben und getestet. Die in diesem Handbuch genannten Organozinncarboxylate, die eine technische Bedeutung besitzen (Seite 215), sind zum Teil erfindungsgemäß. Bei der Betrachtung der Versuche der Anmeldung und des Versuchs von Tabelle 28, muß jedoch davon ausgegangen werden, daß in den Versuchen von Tabelle 28 nicht ein anmeldungsgemäßes Organozinncarboxylat eingesetzt worden ist.

Beispiele von bevorzugten Klassen von in der erfindungsgemässen Zusammensetzung einsetzbaren 2,2,6,6-Tetraalkylpiperidinverbindungen, die mindestens eine Gruppe der Formel I enthalten, sind die folgenden:

a) Verbindungen der Formel II

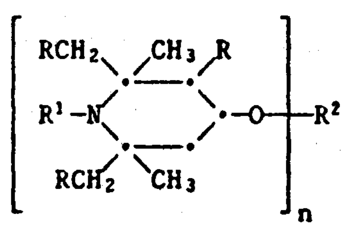

(II),

worin n eine Zahl von 1 bis 4, vorzugsweise 1 oder 2 bedeutet, R Wasserstoff oder Methyl bedeutet, $R^1$ Wasserstoff, Oxyl, $C_1$-$C_{18}$ Alkyl, $C_3$-$C_8$ Alkenyl, $C_3$-$C_8$ Alkinyl, $C_7$-$C_{12}$ Aralkyl, $C_1$-$C_8$ Alkanoyl, $C_3$-$C_5$ Alkenoyl, Glycidyl oder eine Gruppe $-CH_2CH(OH)\text{-}Z$, worin Z Wasserstoff, Methyl oder Phenyl ist, bedeutet, wobei $R^1$ vorzugsweise $C_1$-$C_{12}$ Alkyl, Allyl, Benzyl, Acetyl oder Acryloyl ist und $R^2$, wenn n 1 ist, Wasserstoff, gegebenenfalls durch ein oder mehrere Sauerstoffatome unterbrochenes $C_1$-$C_{18}$ Alkyl, Cyanethyl, Benzyl, Glycidyl, einen einwertigen Rest einer aliphatischen, cycloaliphatischen, araliphatischen, ungesättigten oder aromatischen Carbonsäure, Carbaminsäure oder Phosphor enthaltenden Säure oder einen einwertigen Silylrest, vorzugsweise einen Rest einer aliphatischen Carbonsäure mit 2 bis 18 C-Atomen, einer cycloaliphatischen Carbonsäure mit 7 bis 15 C-Atomen, einer $\alpha,\beta$-ungesättigten

Carbonsäure mit 3 bis 5 C-Atomen oder einer aromatischen Carbonsäure mit 7 bis 15 C-Atomen bedeutet, wenn n 2 ist, $C_1$-$C_{12}$ Alkylen, $C_4$-$C_{12}$ Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2 bis 36 C-Atomen, einer cycloaliphatischen oder aromatischen Dicarbonsäure mit 8 - 14 C-Atomen oder einer aliphatischen, cycloaliphatischen oder aromatischen Dicarbaminsäure mit 8 - 14 C-Atomen bedeutet, wenn n 3 ist, einen dreiwertigen Rest einer aliphatischen, cycloaliphatischen oder aromatischen Tricarbonsäure, einer aromatischen Tricarbaminsäure oder einer Phosphor enthaltenden Säure oder einen dreiwertigen Silylrest bedeutet und wenn n 4 ist, einen vierwertigen Rest einer aliphatischen, cycloaliphatischen oder aromatischen Tetracarbonsäure bedeutet.

Bedeuten etwaige Substituenten $C_1$-$C_{12}$ Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

In der Bedeutung von $C_1$-$C_{18}$ Alkyl können $R^1$ oder $R^2$ z.B. die oben angeführten Gruppen und dazu noch beispielsweise n-Tridecyl, n-Tetradecyl, n-Hexadecyl oder n-Octadecyl darstellen.

Wenn $R^1$ $C_3$-$C_8$ Alkenyl bedeutet, so kann es sich z.B. um 1-Propenyl, Allyl, Methallyl, 2-Butenyl, 2-Pentenyl, 2-Hexenyl, 2-Octenyl, 4-tert.-Butyl-2-butenyl handeln.

$R^1$ ist als $C_3$-$C_8$ Alkinyl bevorzugt Propargyl.

Als $C_7$-$C_{12}$ Aralkyl ist $R^1$ insbesondere Phenethyl oder vor allem Benzyl.

$R^1$ ist als $C_1$-$C_8$ Alkanoyl beispielsweise Formyl, Propionyl, Butyryl, Octanoyl, aber bevorzugt Acetyl und als $C_3$-$C_5$ Alkenoyl insbesondere Acryloyl.

Bedeutet $R^2$ einen einwertigen Rest einer Carbonsäure, so stellt es beispielsweise einen Essigsäure-, Capronsäure-, Stearinsäure-, Acrylsäure-, Methacrylsäure-, Benzoe- oder $\beta$-(3,5-Di-tert.-butyl-4-hydroxyphenyl)-propionsäurerest dar.

Bedeutet $R^2$ einen zweiwertigen Rest einer Dicarbonsäure, so stellt es beispielsweise einen Malonsäure-, Adipinsäure-, Korksäure-, Sebacinsäure-, Maleinsäure-, Phthalsäure-, Dibutylmalonsäure-, Dibenzylmalonsäure-, Butyl-(3,5-di-tert.-butyl-4-hydroxybenzyl)-malonsäure- oder Bicycloheptendicarbonsäurerest dar.

Stellt $R^2$ einen dreiwertigen Rest einer Tricarbonsäure dar, so bedeutet es z.B. einen Trimellitsäure- oder einen Nitrilotriessigsäurerest.

Stellt $R^2$ einen vierwertigen Rest einer Tetracarbonsäure dar, so bedeutet es z.B. den vierwertigen Rest von Butan-1,2,3,4-tetracarbonsäure oder von Pyromellitsäure.

Bedeutet $R^2$ einen zweiwertigen Rest einer Dicarbaminsäure, so stellt es beispielsweise einen Hexamethylendicarbaminsäure- oder einen 2,4-Toluylen-dicarbaminsäurerest dar.

Besonders zu erwähnen sind dabei Verbindungen der Formel II, worin n 1 oder 2, R Wasserstoff, $R^1$ Wasserstoff, Oxyl, $C_1$-$C_6$-Alkyl, $C_3$-$C_8$-Alkenyl, z.B. Allyl, Benzyl, $C_2$-$C_6$-Alkanoyl, $C_3$-$C_5$-Alkenoyl, z.B. Acryloyl oder Methacryloyl, Glycidyl oder $-CH_2CH(OH)-Z_1$, worin $Z_1$ Wasserstoff oder Methyl ist, und $R_2$, wenn n 1 ist, Wasserstoff, $C_1$-$C_{12}$-Alkyl, Benzyl oder den Rest einer aliphatischen Carbonsäure mit 2-18 C-Atomen, einer $\alpha,\beta$-ungesättigten Carbonsäure min 3-5 C-Atomen oder einer aromatischen Carbonsäure mit 7-15 C-Atomen, und wenn n 2 ist, $C_1$-$C_6$-Alkylen, $C_4$-$C_8$-Alkenylen oder den Rest einer aliphatischen gesättigten oder ungesättigten Dicarbonsäure mit 2-18 C-Atomen bedeuten.

Beispiele für Tetraalkylpiperidin-Verbindungen dieser Klasse sind folgende Verbindungen:

1) 4-Hydroxy-2,2,6,6-tetramethylpiperidin
2) 1-Allyl-4-hydroxy-2,2,6,6-tetramethylpiperidin
3) 1-Benzyl-4-hydroxy-2,2,6,6-tetramethylpiperidin 4) 1-(4-tert.-Butyl-2-butenyl)-4-hydroxy-2,2,6,6-tetramethylpiperidin
5) 4-Stearoyloxy-2,2,6,6-tetramethylpiperidin
6) 1-Ethyl-4-salicyloyloxy-2,2,6,6-tetramethylpiperidin
7) 4-Methacryloyloxy-1,2,2,6,6-pentamethylpiperidin
8) 1,2,2,6,6-Pentamethylpiperidin-4-yl-$\beta$-(3,5-di-tert.butyl-4-hydroxyphenyl)-propionat
9) Di-(1-benzyl-2,2,6,6-tetramethylpiperidin-4-yl)-maleinat
10) Di-(2,2,6,6-tetramethylpiperidin-4-yl)-adipat
10a) Di-(1-acetyl-2,2,6,6-tetramethyl-piperidin-4-yl)sebacat
10b) Di-(1-benzyl-2,2,6,6-tetramethyl-piperidin-4-yl)sebacat
10c) N-Butyl-(3,5-di-tert.butyl-4-hydroxybenzyl)-bis-(1,2,2,6,6-pentamethyl-piperidin-4-yl)malonat.
11) Di-(2,2,6,6-tetramethylpiperidin-4-yl)-sebacat
12) Di-(1,2,3,6-tetramethyl-2,6-diethyl-piperidin-4-yl)-sebacat
13) Di-(1-allyl-2,2,6,6-tetramethylpiperidin-4-yl)-phthalat
14) 1-Propargyl-4-$\beta$-cyanoethyloxy-2,2,6,6-tetramethylpiperidin

15) 1-Acetyl-2,2,6,6-tetramethylpiperidin-4-yl-acetat
16) Trimellithsäure-tri-(2,2,6,6-tetramethylpiperidin-4-yl)-ester
17) 1-Acryloyl-4-benzyloxy-2,2,6,6-tetramethylpiperidin
18) Dibutyl-malonsäure-di-(1,2,2,6,6-pentamethylpiperidin-4-yl)-ester
19) Butyl-(3,5-di-tert.-butyl-4-hydroxybenzyl)-malonsäure-di-(1,2,2,6,6-pentamethylpiperidin-4-yl)-ester
20) Dibenzyl-malonsäure-di-(1,2,2,6,6-pentamethylpiperidin-4-yl)-ester
21) Dibenzyl-malonsäure-di-(1,2,3,6-tetramethyl-2,6-diethyl-piperidin-4-yl)ester
22) Hexan-1',6'-bis-(4-carbamoyloxy-1-n-butyl-2,2,6,6-tetramethylpiperidin)
23) Toluol-2',4'-bis-(4-carbamoyloxy-1-n-propyl-2,2,6,6-tetramethylpiperidin)
24) Dimethyl-bis-(2,2,6,6-tetramethylpiperidin-4-oxy)-silan
25) Phenyl-tris-(2,2,6,6-tetramethylpiperidin-4-oxy)-silan
26) Tris-(1-propyl-2,2,6,6-tetramethylpiperdin-4-yl)-phosphit
27) Tris-(1-propyl-2,2,6,6-tetramethylpiperidin-4-yl)phosphat
28) Phenyl-[bis-(1,2,2,6,6-pentamethylpiperidin-4-yl)]-phosphonat
29) Di-(1,2,2,6,6-pentamethylpiperidin-4-yl)-sebacat
29a) 4-Hydroxy-1,2,2,6,6-pentamethylpiperidin
29b) 4-Hydroxy-N-hydroxyethyl-2,2,6,6-tetramethylpiperidin
29c) 4-Hydroxy-N-(2-hydroxypropyl)-2,2,6,6-tetramethylpiperidin
29d) 1-Glycidyl-4-hydroxy-2,2,6,6-tetramethylpiperidin,

wobei die Verbindungen 10, 10a, 10b und 10c bevorzugt sind.

b) Verbindungen der Formel (III)

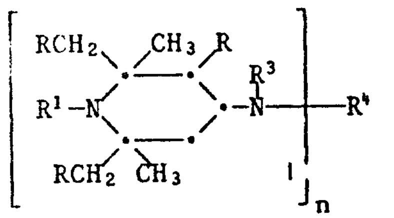

(III)

worin n die Zahl 1 oder 2 bedeutet, R und $R^1$ die unter a) angegebenen Bedeutungen und bevorzugten Bedeutungen haben, $R^3$ Wasserstoff, $C_1$-$C_{12}$ Alkyl, $C_2$-$C_5$ Hydroxyalkyl, $C_5$-$C_7$ Cycloalkyl, $C_7$-$C_8$ Aralkyl, $C_2$-$C_{18}$ Alkanoyl, $C_3$-$C_5$ Alkenoyl oder Benzoyl ist und $R^4$, wenn n 1 ist, Wasserstoff, $C_1$-$C_{18}$ Alkyl, $C_3$-$C_8$ Alkenyl, $C_5$-$C_7$ Cycloalkyl, mit einer Hydroxy-, Cyano-, Alkoxycarbonyl- oder Carbamidgruppe substituiertes $C_1$-$C_4$ Alkyl, Glycidyl, eine Gruppe der Formel $-CH_2-CH(OH)-Z$ oder der Formel -CONH-Z ist, worin Z Wasserstoff, Methyl oder Phenyl bedeutet; wenn n 2 ist, $C_2$-$C_{12}$ Alkylen, $C_6$-$C_{12}$ Arylen, Xylylen, eine $-CH_2-CH(OH)-CH_2$-Gruppe oder eine Gruppe $-CH_2-CH(OH)-CH_2-O-D-O-CH_2-CH(OH)-CH_2-$ bedeutet, worin D $C_2$-$C_{10}$ Alkylen, $C_6$-$C_{15}$ Arylen, $C_6$-$C_{12}$ Cycloalkylen ist, oder vorausgesetzt, dass $R^3$ nicht Alkanoyl, Alkenoyl oder Benzoyl bedeutet, $R^4$ auch einen zweiwertigen Rest einer aliphatischen, cycloaliphatischen oder aromatischen Dicarbonsäure oder Dicarbaminsäure oder auch die Gruppe -CO- bedeuten kann, oder $R^3$ und $R^4$ zusammen, wenn n 1 ist, den zweiwertigen Rest einer aliphatischen, cycloaliphatischen oder aromatischen 1,2- oder 1,3-Dicarbonsäure bedeuten können.

Stellen etwaige Substituenten $C_1$-$C_{12}$- oder $C_1$-$C_{18}$Alkyl dar, so haben sie die bereits unter a) angegebene Bedeutung.

Bedeuten etwaige Substituenten $C_5$-$C_7$ Cycloalkyl, so stellen sie insbesondere Cyclohexyl dar.

Als $C_7$-$C_8$ Aralkyl ist $R^3$ insbesondere Phenylethyl oder vor allem Benzyl. Als $C_2$-$C_5$-Hydroxyalkyl ist $R^3$ insbesondere 2-Hydroxyethyl oder 2-Hydroxypropyl.

$R^3$ ist als $C_2$-$C_{18}$ Alkanoyl beispielsweise Propionyl, Butyryl, Octanoyl, Dodecanoyl, Hexadecanoyl, Octadecanoyl, aber bevorzugt Acetyl und als $C_3$-$C_5$ Alkenoyl insbesondere Acryloyl.

Bedeutet $R^4$ $C_2$-$C_8$ Alkenyl, dann handelt es sich z.B. um Allyl, Methallyl, 2-Butenyl, 2-Pentenyl, 2-Hexenyl oder 2-Octenyl.

$R^4$ als mit einer Hydroxy-, Cyano-, Alkoxycarbonyl- oder Carbamidgruppe substituiertes $C_1$-$C_4$-Alkyl kann z.B. 2-Hydroxyethyl, 2-Hydroxypropyl, 2-Cyanethyl, Methoxycarbonylmethyl, 2-Ethoxycarbonylethyl, 2-Aminocarbonylpropyl oder 2-(Dimethylaminocarbonyl)-ethyl sein.

Stollen etwaige Substituenten $C_2$-$C_{12}$ Alkylen dar, so handelt es sich z.B. um Ethylen, Propylen, 2,2-Dimethylpropylen, Tetramethylen, Hexamethylen, Octamethylen, Decamethylen oder Dodecamethylen.

Bedeuten etwaige Substituenten $C_6$-$C_{15}$-Arylen, so stellen sie z.B. o-, m- oder p-Phenylen, 1,4-Naphthylen, 4,4'-Diphenylen oder

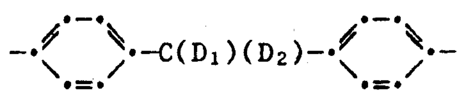

dar, worin $D_1$ und $D_2$ unabhängig voneinander Wasserstoff oder Methyl sind.

Als $C_6$-$C_{12}$ Cycloalkylen ist D insbesondere Cyclohexylen.

Zu erwähnen sind insbesondere solche Verbindungen der Formel III, worin R und $R^1$ die unter a) angegebenen bevorzugten Bedeutungen haben, $R^3$ Wasserstoff oder $C_1$-$C_6$-Alkyl und $R^4$, wenn n 1 ist, Wasserstoff, $C_1$-$C_{12}$-Alkyl, $C_3$-$C_8$-Alkenyl, mit Hydroxy, Cyano oder Carbamido substituiertes $C_1$-$C_4$-Alkyl, $CH_2CH(OH)$-Z, CONH-Z; und wenn n 2 ist, R die unter Formel III angegebenen Bedeutungen hat, mit Ausnahme der gemeinsamen Bedeutung $R^3 + R^4$.

Beispiele für Tetraalkylpiperidin-Verbindungen dieser Klasse sind folgende Verbindungen:

30) N,N'-Bis-(2,2,6,6-tetramethylpiperidin-4-yl)-hexamethylen-1,6-diamin
31) N,N'-Bis-(2,2,6,6-tetramethylpiperidin-4-yl)-hexamethylen-1,6-diacetamid
32) 1-Acetyl-4-(N-cyclohexylacetamido)-2,2,6,6-tetramethylpiperidin
33) 4-Benzoylamino-2,2,6,6-tetramethylpiperidin
34) N,N'-Bis-(2,2,6,6-tetramethylpiperidin-4-yl)-N,N'-dibutyladipamid
35) N,N'-Bis-(2,2,6,6-tetramethylpiperidin-4-yl)-N,N'-dicyclohexyl-2-hydroxypropylen-1,3-diamin
36) N,N'-Bis-(2,2,6,6-tetramethylpiperidin-4-yl)-p-xylylen-diamin
37) Die Verbindung der Formel

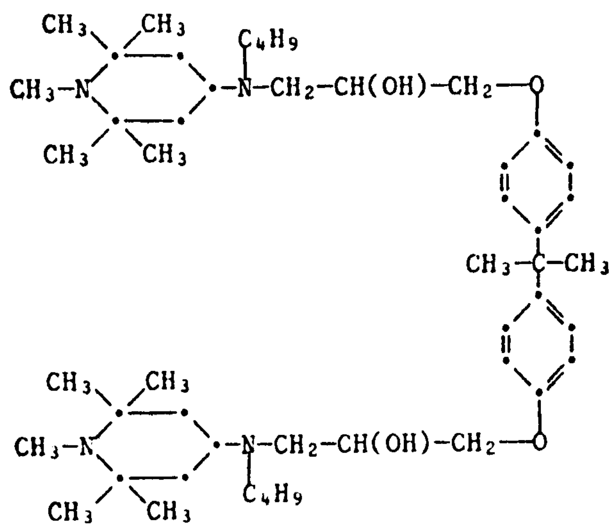

38) 4-(Bis-2-hydroxyethyl-amino)-1,2,2,6,6-pentamethylpiperidin
39) 4-(3-Methyl-4-hydroxy-5-tert.-butyl-benzoesäureamido)-2,2,6,6-tetramethylpiperidin
40) 4-Methacrylamido-1,2,2,6,6-pentamethylpiperidin

c) Verbindungen der Formel (IV)

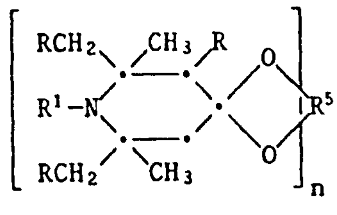

(IV)

worin n die Zahl 1 oder 2 bedeutet, R und $R^1$ die unter a) angegebenen Bedeutungen und bevorzugten Bedeutungen haben und $R^5$, wenn n 1 ist, $C_2$-$C_8$ Alkylen oder Hydroxyalkylen oder $C_4$-$C_{22}$ Acyloxyalkylen, wenn n 2 ist, die Gruppe $(-CH_2)_2C(CH_2-)_2$ bedeutet.

Bedeutet $R^5$ $C_2$-$C_8$-Alkylen oder -Hydroxyalkylen, so stellt es beispielsweise Ethylen, 1-Methylethylen, Propylen, 2-Ethyl-propylen oder 2-Ethyl-2-hydroxymethylpropylen dar.

Als $C_4$-$C_{22}$ Acyloxyalkylen bedeutet $R^5$ z.B. 2-Ethyl-2-acetoxymethylpropylen.

$R^5$ bildet somit in Fall n = 2 die Ergänzung zu einem Spiro-6-Ring und im Fall n = 1 vorzugsweise die Ergänzung zu einem Spiro-5- oder 6-Ring.

Beispiele für Tetraalkylpiperidin-Verbindungen dieser Klasse sind folgende Verbindungen:

41) 9-Aza-8,8,10,10-tetramethyl-1,5-dioxaspiro[5.5]undecan

42) 9-Aza-8,8,10,10-tetramethyl-3-ethyl-1,5-dioxaspiro[5.5]undecan

43) 8-Aza-2,7,7,8,9,9-hexamethyl-1,4-dioxaspiro[4.5]decan

44) 9-Aza-3-hydroxymethyl-3-ethyl-8,8,9,10,10-pentamethyl-1,5-dioxaspiro [5.5]undecan

45) 9-Aza-3-ethyl-3-acetoxymethyl-9-acetyl-8,8,10,10-tetramethyl-1,5-dioxaspiro[5.5]undecan

46) 2,2,6,6-Tetramethylpiperidin-4-spiro-2'-(1',3'-dioxan)-5'-spiro-5''-( 1'',3''-dioxan)-2''-spiro-4'''-(2''',2''',6''',6'''-tetramethylpiperidin).

d) Verbindungen der Formeln VA, VB und VC

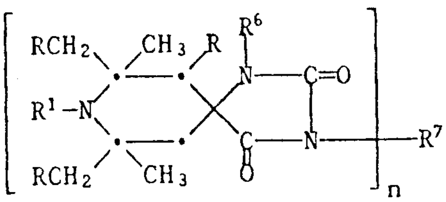

(VA)

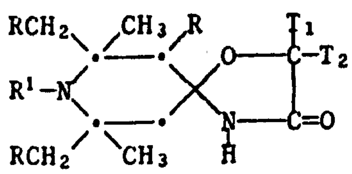

(VB)

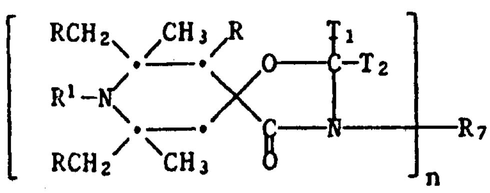

(VC)

worin n die Zahl 1 oder 2 bedeutet, R und $R^1$ die unter a) angegebenen Bedeutungen und bevorzugten Bedeutungen haben, $R^6$ Wasserstoff, $C_1$-$C_{12}$ Alkyl, Allyl, Benzyl, Glycidyl oder $C_2$-$C_6$ Alkoxyalkyl ist und $R^7$, wenn n 1 ist, Wasserstoff, $C_1$-$C_{12}$ Alkyl, $C_3$-$C_5$ Alkenyl, $C_7$-$C_9$ Aralkyl, $C_5$-$C_7$ Cycloalkyl, $C_2$-$C_4$ Hydroxyalkyl, $C_2$-$C_6$ Alkoxyalkyl, $C_6$-$C_{10}$ Aryl, Glycidyl oder eine Gruppe der Formel $-(CH_2)_p-COO-Q$ oder der Formel $-(CH_2)_p-O-CO-Q$ ist, worin p 1 oder 2 und Q $C_1$-$C_4$ Alkyl oder Phenyl sind, wenn n 2 ist, $C_2$-$C_{12}$ Alkylen, $C_4$-$C_{12}$-Alkenylen, $C_6$-$C_{12}$ Arylen, eine Gruppe $-CH_2-CH(OH)-CH_2-O-D-O-CH_2-CH(OH)-CH_2-$, worin D $C_2$-$C_{10}$ Alkylen, $C_6$-$C_{15}$ Arylen, $C_6$-$C_{12}$ Cycloalkylen ist, oder eine Gruppe $-CH_2CH(OZ')-CH_2-(OCH_2-CH(OZ')CH_2)_2-$ bedeutet, worin Z' Wasserstoff, $C_1$-$C_{18}$ Alkyl, Allyl, Benzyl, $C_2$-$C_{12}$ Alkanoyl oder Benzoyl ist, $T_1$ und $T_2$ unabhängig voneinander Wasserstoff, $C_1$-$C_{18}$ Alkyl oder gegebenenfalls durch Halogen oder $C_1$-$C_4$ Alkyl substituiertes $C_6$-$C_{10}$ Aryl oder $C_7$-$C_9$ Aralkyl bedeuten oder $T_1$ und $T_2$ zusammen mit dem sie bindenden C-Atom einen $C_5$-$C_{12}$ Cycloalkanring bilden.

Bedeuten etwaige Substituenten $C_1$-$C_{12}$ Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

Etwaige Substituenten in der Bedeutung von $C_1$-$C_{18}$ Alkyl können z.B. die oben angeführten Gruppen und dazu noch beispielsweise n-Tridecyl, n-Tetradecyl, n-Hexadecyl oder n-Octadecyl darstellen.

Bedeuten etwaige Substituenten $C_2$-$C_6$ Alkoxyalkyl, so stellen sie z.B. Methoxymethyl, Ethoxymethyl, Propoxymethyl, tert.-Butoxymethyl, Ethoxyethyl, Ethoxypropyl, n-Butoxyethyl, tert.-Butoxyethyl, Isopropoxyethyl oder Propoxypropyl dar.

Stellt $R^7$ $C_3$-$C_5$ Alkenyl dar, so bedeutet es z.B. 1-Propenyl, Allyl, Methallyl, 2-Butenyl oder 2-Pentenyl.

Als $C_7$-$C_9$ Aralkyl sind $R^7$, $T_1$ und $T_2$ insbesondere Phenethyl oder vor allem Benzyl. Bilden $T_1$ und $T_2$ zusammen mit dem C-Atom einen Cycloalkanring, so kann dies z.B. ein Cyclopentan-, Cyclohexan-, Cyclooctan- oder Cyclododecanring sein.

Bedeutet $R^7$ $C_2$-$C_4$ Hydroxyalkyl, so stellt es z.B. 2-Hydroxyethyl, 2-Hydroxypropyl, 2-Hydroxybutyl oder 4-Hydroxybutyl dar.

Als $C_6$-$C_{10}$ Aryl bedeuten $R^7$, $T_1$ und $T_2$ insbesondere Phenyl, $\alpha$- oder $\beta$-Naphthyl, die gegebenenfalls mit Halogen oder $C_1$-$C_4$ Alkyl substituiert sind.

Stellt $R^7$ $C_2$-$C_{12}$ Alkylen dar, so handelt es sich z.B. um Ethylen, Propylen, 2,2-Dimethylpropylen, Tetramethylen, Hexamethylen, Octamethylen, Decamethylen oder Dodecamethylen.

Als $C_4$-$C_{12}$ Alkenylen bedeutet $R^7$ insbesondere 2-Butenylen, 2-Pentenylen oder 3-Hexenylen.

Bedeutet $R^7$ $C_6$-$C_{12}$ Arylen, so stellt es beispielsweise o-, m- oder p-Phenylen, 1,4-Naphthylen oder 4,4'-Diphenylen dar.

Bedeutet Z' $C_2$-$C_{12}$ Alkanoyl, so stellt es beispielsweise Propionyl, Butyryl, Octanoyl, Dodecanoyl, aber bevorzugt Acetyl dar.

D hat als $C_2$-$C_{10}$ Alkylen, $C_6$-$C_{15}$ Arylen oder $C_6$-$C_{12}$ Cycloalkylen die unter b) angegebenen bevorzugten Bedeutungen.

Beispiele für Tetraalkylpiperidin-Verbindinngen dieser Klasse sind folgende Verbindungen:

47) 3-Benzyl-1,3,8-triaza-7,7,9,9-tetramethylspiro[4.5]decan-2,4-dion
48) 3-n-Octyl-1,3,8-triaza-7,7,9,9-tetramethylspiro[4.5]decan-2,4-dion
49) 3-Allyl-1,3,8-triaza-1,7,7,9,9-pentamethylspiro[4.5]decan-2,4-dion
50) 3-Glycidyl-1,3,8-triaza-7,7,8,9,9-pentamethylspiro[4.5]decan-2,4-dion
51) 2-Isopropyl-7,7,9,9-tetramethyl-1-oxa-3,8-diaza-4-oxo-spiro-[4.5]decan
52) 2,2-Dibutyl-7,7,9,9-tetramethyl-1-oxa-3,8-diaza-4-oxo-spiro-[4.5]decan
53) 2,2,4,4-Tetramethyl-7-oxa-3,20-diaza-21-oxo-dispiro[5.1.11.2]-heneicosan
54) 2-Butyl-7,7,9,9-tetramethyl-1-oxa-4,8-diaza-3-oxo-spiro-[4,5]decan
54a) 8-Acetyl-3-dodecyl-1,3,8-triaza-7,7,9,9-tetramethylspiro[4,5]-decan-2,4-dion

oder die Verbindungen der folgenden Formeln:

55) 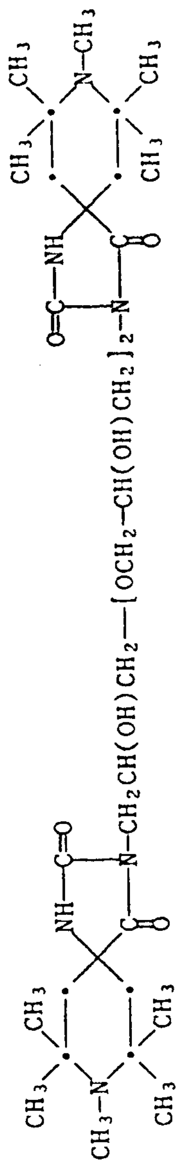

56) 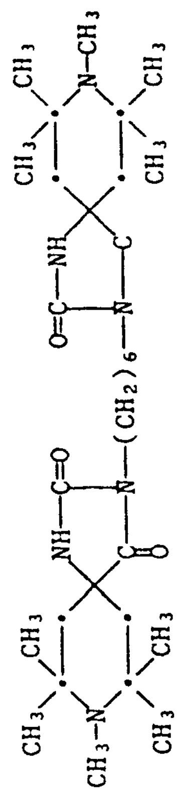

57) 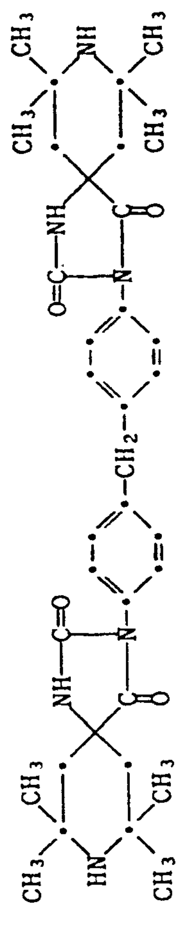

58) 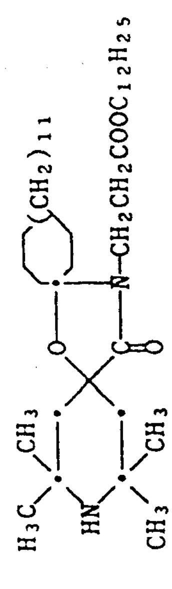

wobei die Verbindung 54a bevorzugt ist.

e) Verbindungen der Formel VI

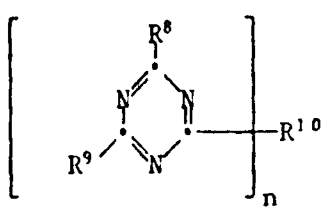

(VI),

worin n die Zahl 1 oder 2 ist und $R^8$ eine Gruppe der Formel

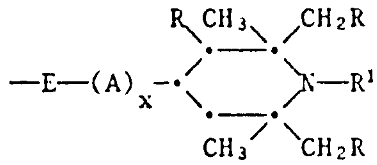

bedeutet, worin R und $R^1$ die unter a) angegebenen Bedeutungen und bevorzugten Bedeutungen haben, E -O- oder $-NR^{11}-$ ist, A $C_2$-$C_6$-Alkylen oder $-(CH_2)_3-O-$ und x die Zahlen 0 oder 1 bedeuten, $R^9$ gleich $R^8$ oder eine der Gruppen $-NR^{11}R^{12}$, $-OR^{13}$, $-NHCH_2OR^{13}$ oder $-N(CH_2OR^{13})_2$ ist, $R^{10}$, wenn n = 1 ist, gleich $R^8$ oder $R^9$, und wenn n = 2 ist, eine Gruppe -E-B-E- ist, worin B gegebenenfalls durch $-N(R^{11})$-unterbrochenes $C_2$-$C_6$ Alkylen bedeutet, $R^{11}$ $C_1$-$C_{12}$ Alkyl, Cyclohexyl, Benzyl oder $C_1$-$C_4$ Hydroxyalkyl oder eine Gruppe der Formel

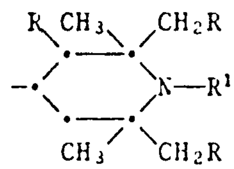

ist, $R^{12}$ $C_1$-$C_{12}$ Alkyl, Cyclohexyl, Benzyl, $C_1$-$C_4$ Hydroxyalkyl und $R^{13}$ Wasserstoff, $C_1$-$C_{12}$ Alkyl oder Phenyl bedeuten oder $R^{11}$ und $R^{12}$ zusammen $C_4$-$C_5$-Alkylen oder -Oxaalkylen, beispielsweise

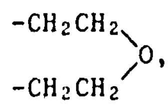

oder eine Gruppe der Formel

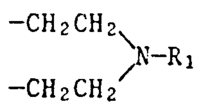

sind oder auch $R^{11}$ und $R^{12}$ jeweils eine Gruppe der Formel

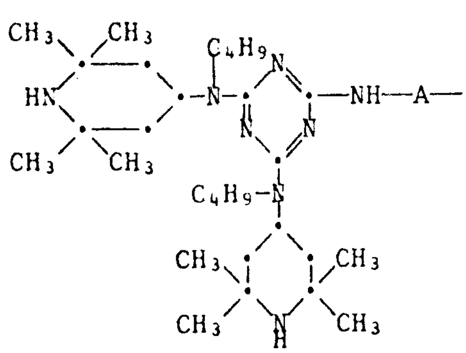

bedeuten.

Bedeuten etwaige Substituenten $C_1$-$C_{12}$ Alkyl, so stellen sie beispielsweise Methyl, Ethyl, n-Propyl, n-Butyl, sek.-Butyl, tert.-Butyl, n-Hexyl, n-Octyl, 2-Ethylhexyl, n-Nonyl, n-Decyl, n-Undecyl oder n-Dodecyl dar.

Bedeuten etwaige Substituenten $C_1$-$C_4$ Hydroxyalkyl, so stellen sie z.B. 2-Hydroxyethyl, 2-Hydroxypropyl, 3-Hydroxypropyl, 2-Hydroxybutyl oder 4-Hydroxybutyl dar.

Bedeutet A $C_2$-$C_6$ Alkylen, so stellt es beispielsweise Ethylen, Propylen, 2,2-Dimethylpropylen, Tetramethylen oder Hexamethylen dar.

Stellen $R^{11}$ und $R^{12}$ zusammen $C_4$-$C_5$ Alkylen oder Oxaalkylen dar, so bedeutet dies z.B. Tetramethylen, Pentamethylen oder 3-Oxapentamethylen.

Beispiele für Tetraalkylpiperidin-Verbindungen dieser Klasse sind die Verbindungen der folgenden Formeln:

59)

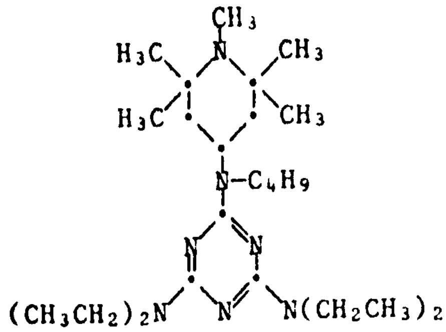

60)

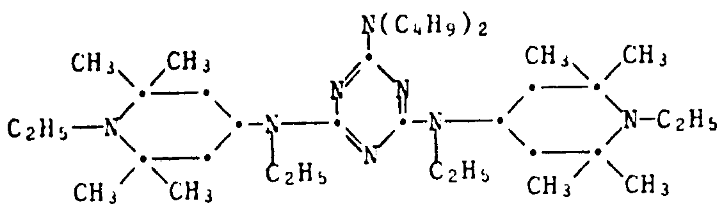

61)

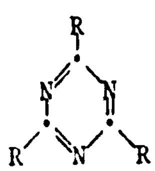

mit R = -NH-$CH_2CH_2CH_2$-O-

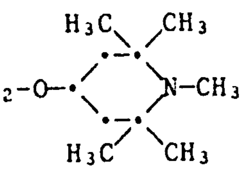

62)

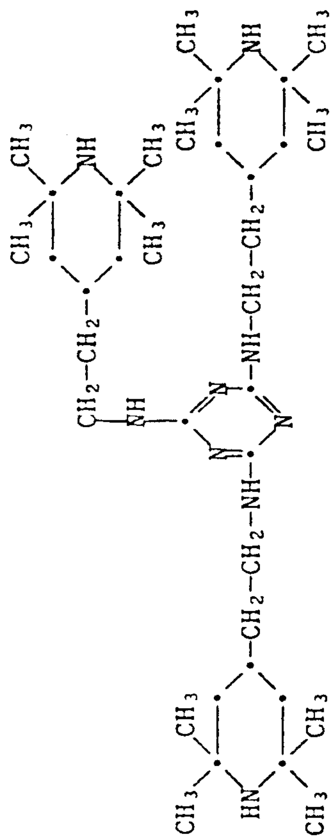

63)

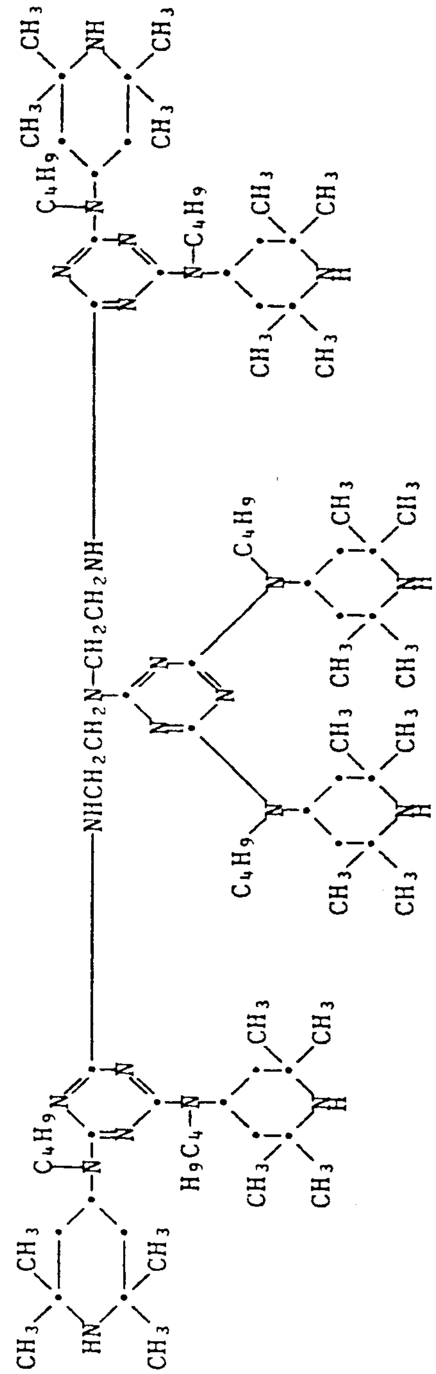

64) 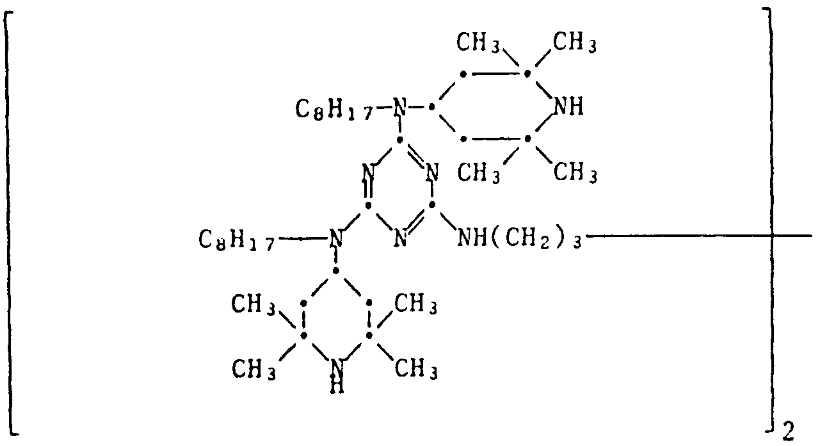

65) 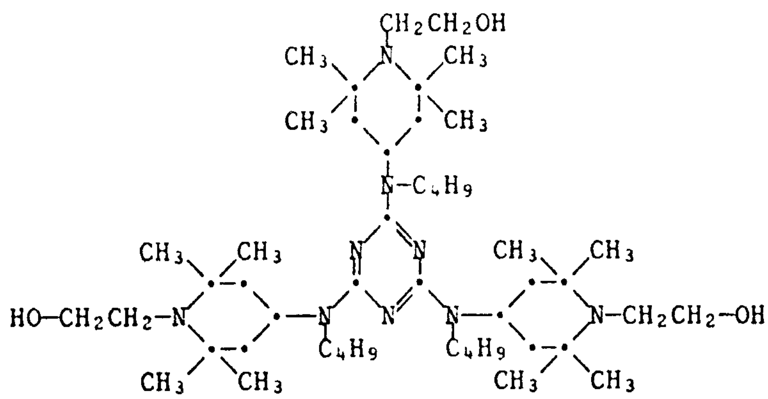

(66) 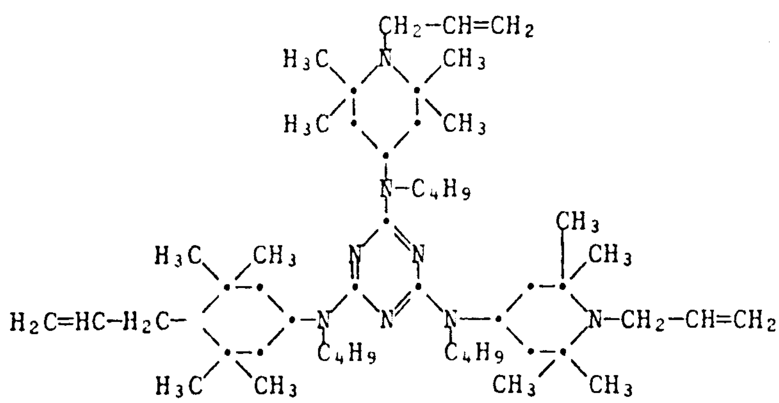

f) Verbindungen der Formel VII

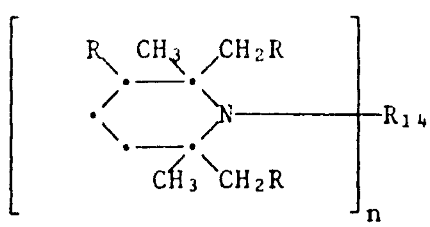 (VII),

worin n die Zahlen 1 oder 2 bedeutet, R die für Formel I angegebene Bedeutung hat und $R_{14}$, wenn n = 1, $C_4$-$C_{18}$-Alkyl, $C_7$-$C_{12}$-Aralkyl, die Gruppe -CO-$R_{15}$, $C_1$-$C_4$-Alkyl substituiert durch -CN, -$COOR_{16}$, -OH, -$OCOR_{17}$ oder

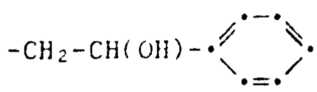

bedeutet, wobei $R_{15}$ $C_1$-$C_{12}$-Alkyl, $C_2$-$C_4$-Alkenyl oder Phenyl, $R_{16}$ $R_1$-$C_{18}$-Alkyl, $R_{17}$ $C_1$-$C_{18}$-Alkyl, $C_2$-$C_{10}$-Alkenyl, Cyclohexyl, Benzyl oder $C_6$-$C_{10}$-Aryl sind oder, wenn n = 2, $R_{14}$ $C_4$-$C_{12}$-Alkylen, 2-Butenylen-1,4, Xylylen, die Gruppe -$(CH_2)_2$-OOC-$R_{18}$-COO-$(CH_2)_2$- oder die Gruppe -$CH_2$-OOC-$R_{19}$-COO-$CH_2$- ist, wobei $R_{18}$ $C_2$-$C_{10}$-Alkylen, Phenylen oder Cyclohexylen und $R_{19}$ $C_2$-$C_{10}$-Alkylen, Xylylen oder Cyclohexylen bedeuten.

Bedeuten etwaige Substituenten $C_1$-$C_{12}$-Alkyl, so stellen sie z.B. Methyl, Aethyl, n-Propyl, n-Butyl, sek.-Butyl, tert.-Butyl, n-Hexyl, n-Octyl, 2-Aethyl-hexyl, n-Nonyl, n-Decyl, n-Undecyl oder n-Dodecyl dar.

Etwaige Substituenten, die $C_1$-$C_{18}$-Alkyl bedeuten, können z.B. die oben angeführten Gruppen und dazu noch beispielsweise n-Tridecyl, n-Tetradecyl, n-Hexadecyl oder n-Octadecyl darstellen.

Stellen etwaige Gruppen $C_2$-$C_{10}$-Alkylen dar, so bedeuten sie beispielsweise Aethylen, Propylen, 2,2-Dimethylpropylen, Tetramethylen, Hexamethylen, Octamethylen oder Decamethylen.

$R_{14}$ bedeutet als $C_4$-$C_{18}$-Alkyl z.B. n-Butyl, sek.-Butyl, tert.-Butyl, n-Hexyl, n-Octyl, 2-Aethyl-hexyl, 1,1-Dimethyl-2-tert.-butyläthyl, n-Nonyl, n-Decyl, n-Dodecyl, n-Tridecyl, n-Tetradecyl, n-Hexadecyl oder n-Octadecyl.

Bedeutet $R_{14}$ ein durch -CN substituiertes $C_1$-$C_4$-Alkyl, so stellt es beispielsweise Cyanomethyl, Cyanoäthyl, 3-Cyano-n-propyl, 4-Cyano-n-butyl dar.

Bedeutet $R_{14}$ $C_4$-$C_{12}$-Alkylen, so handelt es sich z.B. um 2,2-Dimethylpropylen, Tetramethylen, Hexamethylen, Octamethylen, Decamethylen oder Dodecamethylen.

Stellt $R_{14}$ $C_7$-$C_{12}$-Aralkyl dar, so bedeutet es insbesondere Phenäthyl, p-Methyl-benzyl oder vor allem Benzyl.

$R_{15}$ bedeutet als $C_2$-$C_4$-Alkenyl beispielsweise Vinyl, 1-Propenyl, Allyl, Methallyl, 2-Butenyl.

$R_{17}$ bedeutet als $C_2$-$C_{10}$-Alkenyl z.B. die für $R_{15}$ in der Bedeutung Alkenyl angeführten Gruppen und dazu noch beispielsweise Crotyl, 2-Hexenyl, 2-Octenyl oder 2-Decenyl.

Stellt $R_{17}$ $C_6$-$C_{10}$-Aryl dar, so bedeutet es beispielsweise gegebenenfalls in o- oder p-Stellung mit Methyl, Aethyl, Isopropyl, n-Butyl oder tert.-Butyl substituiertes Phenyl.

Beispiele für Polyalkylpiperidin-Lichtschutzmittel dieser Klasse sind folgende Verbindungen:

67) Bis-[$\beta$-(2,2,6,6-tetramethylpiperidino)-äthyl]sebacat

68) $\alpha$-(2,2,6,6-Tetramethyl-piperidino)-essigsäure-n-octylester

69) 1,4-Bis-(2,2,6,6-tetramethylpiperidino)-2-buten.

g) Verbindungen der Formel VIII

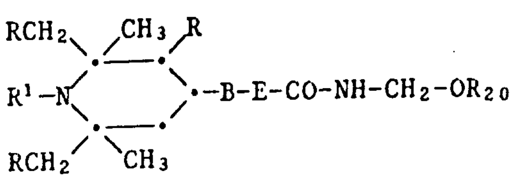

(VIII),

worin B -N($R_{21}$)- oder -O- ist, E $C_1$-$C_3$-Alkylen, die Gruppe -$CH_2CH(Z_4)$-O-, worin $Z_4$ Wasserstoff, Methyl oder Phenyl ist, die Gruppe -$(CH_2)_3$-NH- oder eine Einfachbindung bedeutet, R Wasserstoff oder Methyl ist, $R_1$ die unter a) angegebene Bedeutung hat, $R_{20}$ Wasserstoff oder $C_1$-$C_{18}$-Alkyl bedeutet, $R_{21}$ Wasserstoff, $C_1$-$C_{18}$-Alkyl,$C_5$-$C_7$-Cycloalkyl, $C_7$-$C_{12}$-Aralkyl, Cyanäthyl, $C_6$-$C_{10}$-Aryl, die Gruppe -$CH_2$-$CH(Z_4)$-OH, worin $Z_4$ die oben angegebene Bedeutung hat, eine Gruppe der Formel

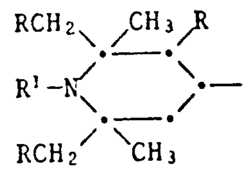

oder eine Gruppe der Formel

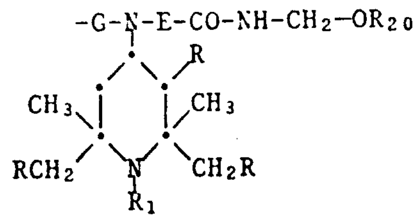

bedeutet, worin G $C_2$-$C_6$-Alkylen oder $C_6$-$C_{12}$-Arylen sein kann, oder $R_{21}$ eine Gruppe -E-CO-NH-$CH_2$-$OR_{20}$ ist.

Bedeuten etwaige Substituenten $C_1$-$C_{18}$-Alkyl, so stellen sie z.B. Methyl, Aethyl, n-Propyl, n-Butyl, sek.-Butyl, tert.-Butyl, n-Hexyl, n-Octyl, 2-Aethyl-hexyl, n-Nonyl, n-Decyl, n-Undecyl, n-Dodecyl, n-Tridecyl, n-Tetradecyl, n-Hexadecyl oder n-Octadecyl dar.

Stellen etwaige Substituenten $C_7$-$C_{12}$-Aralkyl dar, so bedeuten sie beispielsweise Phenäthyl oder insbesondere Benzyl.

Wenn $R_1$ $C_3$-$C_8$-Alkenyl bedeutet, so kann es sich z.B. um 1-Propenyl, Allyl, Methallyl, 2-Butenyl, 2-Pentenyl, 2-Hexenyl, 2-Octenyl oder 4-tert.-Butyl-2-butenyl handeln.

$R_1$ ist als $C_3$-$C_8$-Alkinyl bevorzugt Propargyl. Als $C_1$-$C_8$-Alkanoyl bedeutet $R_1$ beispielsweise Formyl, Propionyl, Butyryl, Octanoyl aber bevorzugt Acetyl und als $C_3$-$C_5$-Alkenoyl, insbesondere Acryloyl.

$R_{21}$ bedeutet als $C_5$-$C_7$-Cycloalkyl, insbesondere Cyclohexyl.

Als $C_6$-$C_{10}$-Aryl bedeutet $R_{21}$ insbesondere Phenyl, $\alpha$- oder $\beta$-Naphthyl, die gegebenenfalls mit Halogen oder $C_1$-$C_4$-Alkyl substituiert sind. E bedeutet als $C_1$-$C_3$-Alkylen z.B. Methylen, Aethylen oder Propylen.

G stellt als $C_2$-$C_6$-Alkylen beispielsweise Aethylen, Propylen, 2,2-Dimethylpropylen, Tetramethylen oder Hexamethylen und als $C_6$-$C_{12}$-Arylen o-, m- oder p-Phenylen, 1,4-Naphthylen oder 4,4'-Diphenylen dar.

Beispiele für Polyalkylpiperidin-Lichtschutzmittel dieser Klasse sind folgende Verbindungen:

70) N-Hydroxymethyl-N'-2,2,6,6-tetramethylpiperidin-4-yl-harnstoff,

71) N-Methoxymethyl-N'-2,2,6,6-tetramethylpiperidin-4-yl-harnstoff,

72) N-Methoxymethyl-N'-n-dodecyl-N'-2,2,6,6-tetramethylpiperidin-4-yl-harnstoff

73) O-(2,2,6,6-Tetramethylpiperidin-4-yl)-N-methoxymethyl-urethan.

h) Oligomere oder polymere Verbindungen, deren wiederkehrende Struktureinheit einen 2,2,6,6-Tetraalkylpiperidinrest der Formel (I) enthält, insbesondere Polyester, Polyäther, Polyamide, Polyamine, Polyurethane, Polyharnstoffe, Polyaminotriazine, Poly(meth)acrylate, Poly(meth)acrylamide und deren Copolymeren, die solche Reste enthalten.

Beispiele für 2,2,6,6-Tetraalkylpiperidin-Lichtschutzmittel dieser Klasse sind die Verbindungen der folgenden Formeln, wobei m eine Zahl von 2 bis 200 bedeutet.

76)

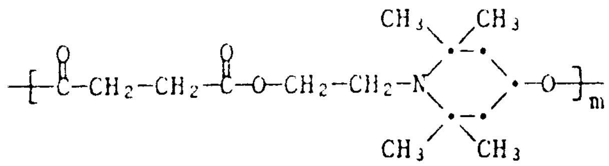

77)

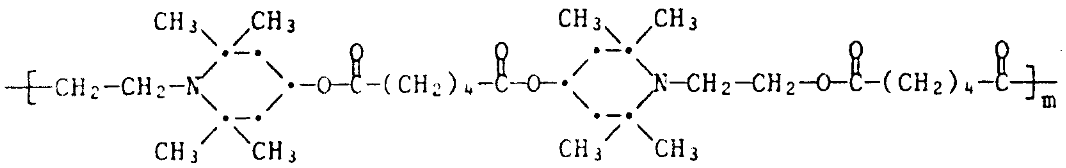

78)

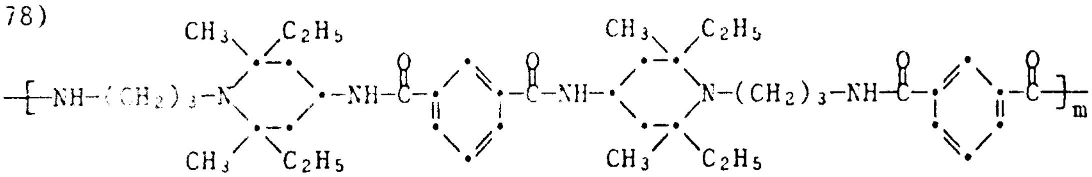

79)

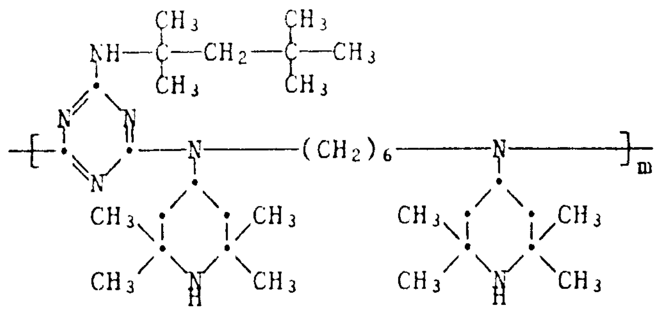

80)

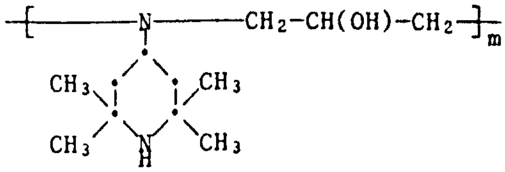

81)

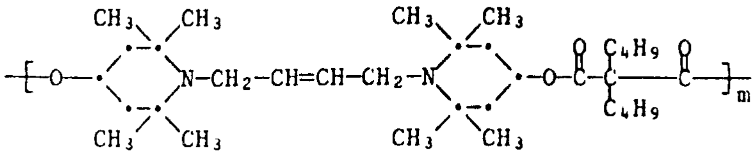

82)

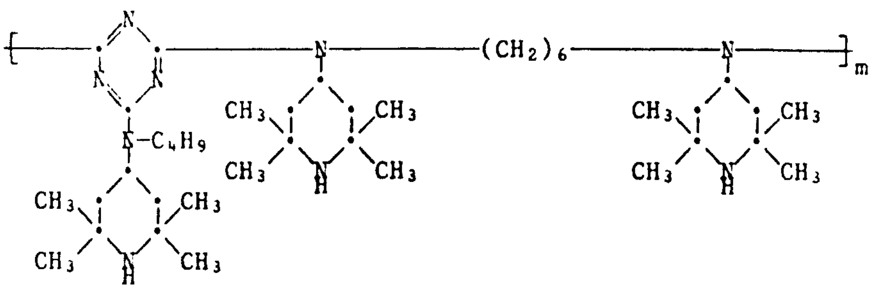

83)

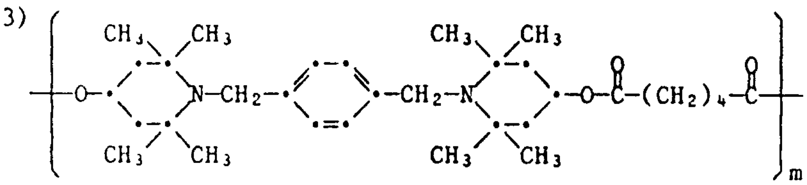

84)

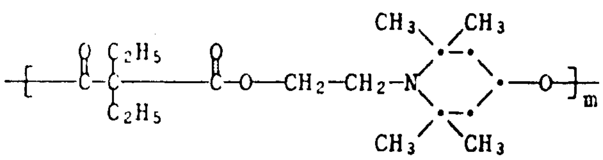

85)

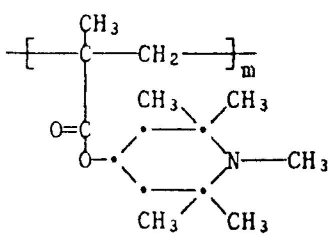

86)

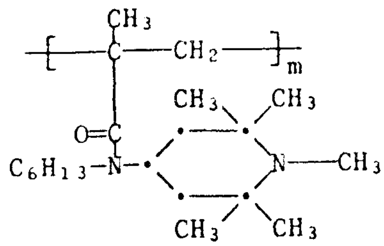

87)

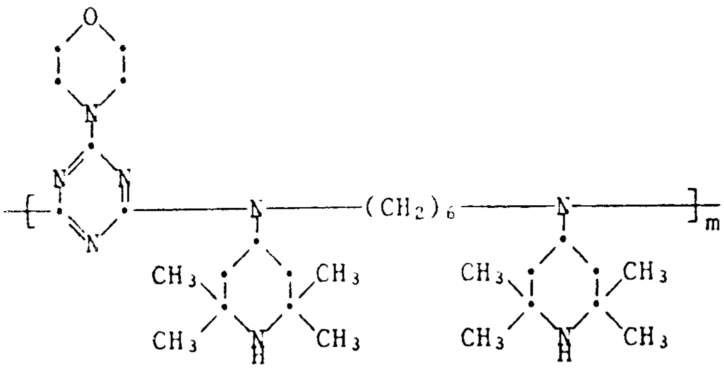

88)

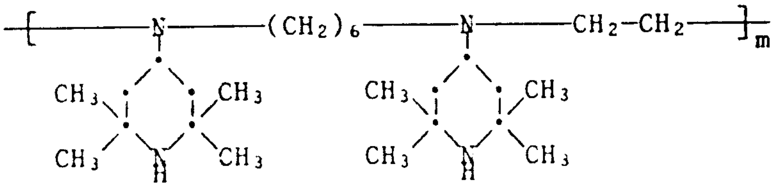

89)

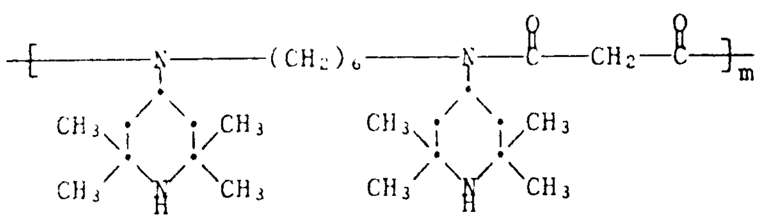

,

wobei die Verbindungen 76 und 79 bevorzugt sind.

i) Verbindungen der Formel IX

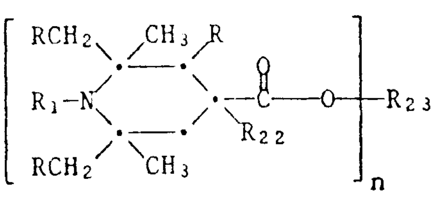

(IX),

worin n eine Zahl von 1 bis 4, vorzugsweise 2 ist, $R_{22}$ H, OH oder $C_1$-$C_8$-Alkoxy bedeutet und für den Fall n = 1 $R_{23}$ $C_1$-$C_{20}$-Alkyl, $C_5$-$C_{12}$-Cycloalkyl oder $C_7$-$C_{14}$-Aralkyl ist und für den Fall n = 2 $R_{23}$ $C_2$-$C_{12}$-Alkylen, $C_6$-$C_{12}$-Cycloalkylen, $C_8$-$C_{16}$-Cycloalkylendialkylen, $C_8$-$C_{14}$-Aralkylen, $C_4$-$C_9$-Mono- oder Dioxaalkylen ist und für den Fall n = 3 $R_{23}$ $C_3$-$C_{12}$-Alkan-triyl und für den Fall n = 4 $R_{23}$ $C_4$-$C_{12}$-Alkan-tetrayl bedeutet und R und $R_1$ wie unter a) definiert sind.

Bevorzugte 2,2,6,6-Tetraalkylpiperidinverbindungen tragen in 4-Stellung des Piperidinringes polare Substituenten oder einen Spiro-Ring. Besonders bevorzugt sind Piperidinverbindungen der oben genannten Klassen a) bis e) und h).

Die Organozinncarboxylate bzw. -alkoholate (Komponente (B) der erfindungsgemässen Zusammensetzung) sind dafür bekannt, dass sie den thermischen Abbau in Polyvinylchlorid verhindern bzw. vermindern.

Wenn in den Organozinnverbindungen der Komponente (B) der erfindungsgemässen Zusammensetzung die Z-Substituenten Alkyl bedeuten ($C_1$-$C_{20}$, $C_{10}$-$C_{30}$ bzw. $C_1$-$C_{30}$), so handelt es sich dabei um geradkettige oder verzweigte Alkylgruppen. Beispiele hierfür sind: Methyl, Ethyl, n-Propyl, Isopropyl, n-Butyl, Isobutyl, sec.-Butyl, tert.-Butyl, n-Amyl, Neopentyl, Isoamyl, n-Hexyl, Isohexyl, Heptyl, Octyl, Decyl, Dodecyl, Tetradecyl, Hexadecyl, Octadecyl, Eicosyl und Docosyl. Stellen die Z-Substituenten Aralkyl dar, so weisen sie vorzugsweise 7-12 C-Atome auf und sind insbesondere Phenyl-$C_1$-$C_4$-Alkyl, beispielsweise Benzyl, $\beta$-Phenylethyl, $\gamma$-Phenylpropyl oder $\beta$-Phenylpropyl. Aryl hat z.B. 6-14 C-Atome und ist beispielsweise Naphthyl, insbesondere Phenyl. Unter Alkylaryl sind insbesondere Napthyl und vor allem Phenyl zu verstehen, die mit 1 bis 3, z.B. 1 oder 2, vorzugsweise 1 $C_1$-$C_{18}$-Alkylgruppe(n) substituiert sind. Beispiele sind Tolyl, Xylyl, p-Ethylphenyl und p-Nonylphenyl. Die vorstehend genannten Substituenten können an den aromatischen Kernen weiter substituiert sein, z.B. mit Alkyl, Aryl, Cycloalkyl, Aralkyl, Alkylaryl, Alkoxy usw. Diese Gruppen haben die gleichen bevorzugten Bedeutungen wie oben angegeben. Alkoxy ist z.B. $C_1$-$C_6$-Alkoxy. Typische substituierte Arylgruppen sind Anisyl und Biphenylyl. Substituiertes Aralkyl ist z.B. Chlorbenzyl, p-Phenylbenzyl und p-Methylbenzyl. Ein Beispiel für substituiertes Alkylaryl ist 2,6-Di-tert.-butyl-4-methylphenyl.

Spezifische Beispiele für die erfindungsgemäss einsetzbaren Organozinncarboxylate bzw. -alkoholate sind:

Dibutylzinn-ditetradecyloxid, Dibutylzinn-diisotridecyloxid, Dibutylzinn-bis-(p-octylphenyloxid), Dicotylzinn-bis-(p-nonylphenyloxid), Dioctylzinn-ditetradecyloxid, Bis(dibutyl-p-nonylphenyloxyzinn)oxid, Bis(dioctyl-p-octylphenyloxy-zinn)oxid, Bis(dibutylisotridecyloxy-zinn)oxid, Bis(dibutyl-tetradecyloxy-zinn)oxid, Dibutylzinn-dilaurat, Bis(dibutyl-isodecanoylzinn)oxid, Dibutylzinn-di-isooctadecylat, Butylzinn-trioctanoat, Diphenylzinn-dilaurat, Dibutylzinn-bis(isooctylmaleat), Dibutylzinn-dipelargonat, Dibutylzinn-distearat, Dihexylzinn-dioleat, Dioctylzinn-ditallat, Dioctylzinn-diundecylenat, Dibutylzinn-bis-(neodecanoat), Dioctylzinn-bis-(neotridecanoat), Dibutylzinn-bis-(monomethylmaleat), Dihexylzinn-bis-(monohexylmaleat), Dihexylzinn-bis-(monoisooctylmaleat), Dibutylzinn-bis-(monocetylmaleat), Dibutylzinn-bis-(monooctadecylmaleat),Dibutylzinn-bis-(mono-2-ethoxyethylmaleat), Dicotylzinn-bis-(monocyclohexylmaleat), Dihexylzinn-bis-(monobenzylmaleat) und Butylhexylzinn-bis(mono-tert.butylbenzyl-maleat).

Bevorzugt werden als Komponente (B) Mischungen aus mindestens einer Verbindung der Formel

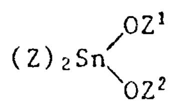

und mindestens einer Verbindung der Formel $(Z)_2Sn(OOC\text{-}Z^3)_2$ eingesetzt.

Weiter sind als Komponente (B) Dibutylzinn-di-isotridecyloxid, Dibutylzinn-di-isostearat, Dibutylzinn-di-2-ethylhexanoat, Dibutylzinndilaurat, Dibutylzinn-ditetradecanoat oder Mischungen davon bevorzugt.

Die erfindungsgemässe Zusammensetzung kann neben den Organozinncarboxylaten bzw. -alkoholaten gegebenenfalls noch andere Stabilisatoren, insbesondere weitere Zinnstabilisatoren, enthalten. Solche zusätzliche Zinnstabilisatoren können z.B. Organozinnmercaptocarbonsäureester oder/und Organozinnmercaptide sein. Organozinnmercaptocarbonsäureester entsprechen z.B. der Formel

$(Z)_mSn(S\text{-}C_pH_{2p}COOZ^4)_{4-m}$

worin Z, $Z^4$ und m wie vorstehend für die Zinncarboxylate bzw. -alkoholate definiert sind und p eine ganze Zahl von 1 bis 5, insbesondere 1 oder 2, vor allem 2, bedeutet. Bevorzugte Bedeutungen für Z und $Z^4$ entsprechen ebenfalls den weiter oben angegebenen.

Beispiele für solche Organozinnmercaptoester sind Octylzinn-tris-(dodecyl-$\beta$-mercaptopropionat), Dibutylzinn-bis(isotridecyl-$\beta$-mercaptopropionat, Dibutylzinn-bis(2-ethylhexyl-$\beta$-mercaptopropionat), Dibutylzinn-bis(tetradecyl-$\beta$-mercaptopropionat), Octylzinn-tris(alfyl-thioglycolat), Tributylzinn-isooctyl-thioglycolat, Butylzinn-tris(cyclohexyl-thioglycolat), Octylzinn-tris(isooctyl-mercaptoacetat) usw., wobei Dibutylzinn-bis-(isotridecyl-$\beta$-mercaptopropionat), Dibutylzinn-bis(tetradecyl-$\beta$-mercaptopropionat), Octylzinn-tris(dodecyl-$\beta$-mercaptopropionat) oder Dibutylzinn-bis(2-ethylhexyl-$\beta$-mercaptopropionat) oder deren Mischungen bevorzugt eingesetzt werden.

Wie weiter oben erwähnt, sind die Organozinncarboxylate und -alkoholate sowie die Organozinnmercaptoester und Methoden für deren Herstellung an sich bekannt. US-A 2,870,182, 3,398,114, 3,562,305, 3,640,950, 3,640,947, 3,657,294, 3,933,741, 4,193,913 und 4,358,555, CA-A 1,152,735 und 1,170,031 sind einige der vielen Patente, die solche Organozinnverbindungen beschreiben. Mischungen von Carboxylaten und Mercaptoestern sind z.B. in US-A 3,562,305 und 3,933,741, CA-A 1,152,735 und 1,170,031 beschrieben. Der Inhalt der genannten Patente ist auch Gegenstand der vorliegenden Beschreibung.

Wie ebenfalls bereits erwähnt, können zusammen mit den Organozinncarboxylaten bzw. -alkoholaten oder zusammen mit Mischungen aus letzteren und Organozinnmercaptocarbonsäureestern gegebenenfalls noch Organozinnmercaptide in der erfindungsgemässen Zusammensetzung vorhanden sein. Auch diese sind an sich bekannt und teilweise im Handel erhältlich. Solche Mercaptide entsprechen z.B. der allgemeinen Formel $(Z^5S)_ySn(Z^6)_{4-y}$, worin $Z^5$ und $Z^6$ unabhängig voneinander Alkyl, Cycloalkyl, Aryl, Alkylaryl oder Aralkyl bedeuten, wobei bevorzugte Substituentenbedeutungen die gleichen sind, wie sie für die übrigen Z-Substituenten weiter oben angegeben sind. Besonders bevorzugt bedeuten beide Substituenten Alkyl. Y ist eine Zahl von 1 bis 3. Eine grosse Anzahl von Zinnmercaptiden und Methoden für deren Herstellung ist in US-A 2,641,588, 2,726,227, 3,933,741 und 3,953,285 beschrieben. Der Inhalt dieser Patente ist diesbezüglich ebenfalls Gegenstand der vorliegenden Beschreibung. Ebenso sind Mischungen von Zinncarboxylaten und -mercaptiden beispielsweise in US-A 3,562,305 und 3,933,741 beschrieben.

Beispiele für Organozinnmercaptide sind Dibutylzinn-bis(laurylmercaptid), Butylzinn-tris-(laurylmercaptid), Dibutylzinn-bis(octylmercaptid), Dibutylzinn-bis(benzylmercaptid), Dioctylzinn-bis-(cyclohexylmercaptid), Dioctylzinn-bis(octylmercaptid), Dimethylzinn-bis(laurylmercaptid) und Dicyclohexylzinn-bis(laurylmercaptid).

Die Komponente (A) (2,2,6,6-Tetraalkylpiperidinverbindung(en)) ist in der erfindungsgemässen Zusammensetzung vorzugsweise in Mengen von 0,1 bis 3, insbesondere 0,25 bis 1,5 Gew.%, bezogen auf die gesamte Zusammensetzung, vorhanden. Die Konzentration an Komponente (B) (Organozinncarboxylat bzw. -alkoholat) beträgt vorzugsweise 1 bis 5, insbesondere 1,5 bis 4 Gew.%, bezogen auf die gesamte Zusammensetzung. Wenn zusätzlich Organozinnmercaptocarbonsäureester oder/und Organozinnmercaptide verwendet werden, so werden sie vorzugsweise in solchen Mengen eingesetzt, dass sie entweder einzeln oder zusammen bis zu 70 Gew.%, insbesondere bis zu 40 Gew.% der Komponente (B) ersetzen.

Wird Titandioxid in der erfindungsgemässen Zusammensetzung eingesetzt, handelt es sich um die bekannten und im Handel erhältlichen Typen. Bevorzugt ist dabei die Rutil-Modifikation. Die erfindungsgemässe Zusammensetzung enthält zweckmässig 0 bis 10, z.B. 1 bis 10, bevorzugt 2 bis 8, insbesondere 4 bis 6 Gew.% an Titandioxid, bezogen auf die gesamte Zusammensetzung. Wenn Titandioxid eingesetzt wird, kann es in den vorstehend genannten Konzentrationen in Kombination mit dem erfindungsgemässen Stabilisatorsystem einen Beitrag zur Stabilität des Kunststoffes leisten, während die eingangs geschilderten Nachteile von sehr hohen Titandioxidkonzentrationen vermieden werden.

Die vorliegende Erfindung bezieht sich auf eine Zusammensetzung aus Hart-Polyvinylchlorid, d.h. unplastifiziertes (weichmacherfreies) Polyvinylchloridharz bzw. auf Harzmischungen, die mindestens 85 % Polyvinylchlorid enthalten. Diese Kunststoffe enthalten in der Regel weitere übliche Additive, beispielsweise Verarbeitungshilfsmittel, Schlagzähigkeitsmodifikatoren, Gleitmittel, Pigmente, Füllstoffe usw. Ferner kann die erfindungsgemässe Zusammensetzung auch konventionelle UV-Absorber und Antioxidantien enthalten, wie Benzoate, Benztriazole, Benzophenone, gehinderte Phenole oder Mischungen davon. Methoden zur Verarbeitung von Hart-PVC sind dem Fachmann bekannt und diese Methoden können zur Verarbeitung der erfindungsgemässen Zusammensetzung eingesetzt werden. So ist Mischen (Compoundieren) und nachfolgende Extrusion die übliche Methode zur Herstellung von Aussenverkleidungen aus Hart-PVC.

Wie bereits eingangs angedeutet, weist die erfindungsgemässe Hart-PVC-Zusammensetzung ein breites Spektrum von erwünschten Eigenschaften auf. Insbesondere zeigt sie ausgezeichnete thermische Stabilität und Stabilität gegenüber UV-Bestrahlung über lange Zeiträume. Sie erlaubt die Reduktion des Titandioxidgehalts ohne Verlust an Lichtstabilität und Schlagfestigkeit. Zusätzlich bewirkt das Weglassen von Titandioxid bzw. die Verminderung dessen Konzentration einen deutlich verringerten Verschleiss an den Verarbeitungsmaschinen und erlaubt die Verwendung einer grösseren Anzahl von Pigmentsystemen, was zu einer grösseren Auswahl an lichten, pastellfarbenen und dunklen Farbtönen führt.

Das nachfolgende Beispiel erläutert die Erfindung weiter. Alle Teile beziehen sich darin auf das Gewicht, wenn nichts anderes angegeben ist.

Beispiel: Die folgenden Hart-PVC-Grundformulierungen I bis VII werden in den erfindungsgemässen Zusammensetzungen verwendet:

Teile

| | I | II | III | IV | V | VI | VII |
|---|---|---|---|---|---|---|---|
| PVC (®Diamond Shamrock 500) | 100 | 100 | --- | --- | --- | --- | 100 |
| PVC (®GEON 103 EP-76) | --- | --- | 100 | 100 | 100 | 100 | --- |
| Verarbeitungshilfsmittel (®ACRYLOID K120N = Methacrylsäure/Methacrylsäureester-Mischung) | 1.0 | 1.0 | 2.0 | 2.0 | 1.5 | 1.5 | 2.5 |
| Acrylat-Schlagzähigkeitsmodifikator (®ACRYLOID K323B) | 7.0 | 7.0 | 7.0 | 7.0 | 7.0 | 7.0 | --- |
| Calciumstearat | --- | --- | 0.8 | --- | 0.8 | --- | --- |
| Paraffinwachs | 0.6 | --- | 1.0 | 1.0 | 1.0 | 1.0 | --- |
| Polyethylenwachs | 0.3 | 0.2 | 0.2 | 0.2 | 2.0 | 0.2 | --- |
| Titandioxid (Rutil) | | | | variabel (siehe unten) | | | |
| 2,2,6,6-Tetraalkylpiperidinverbindung | | | | variabel (siehe unten) | | | |
| Organozinnverbindung | | | | variabel (siehe unten) | | | |

Die Bestandteile werden zusammen mit den unten angegebenen Mengen an $TiO_2$ und Stabilisatoren gemischt. Die Proben werden auf einem Zweiwalzenstuhl (vordere Rolle 171 °C, hintere Rolle 165 °C) drei Minuten lang ausgewalzt. Das Walzfell wird dann verpresst (Temperatur 182 °C, 2 Minuten Kontaktdruck, 1 Minute Pumpdruck, 2 Minuten Volldruck, Abkühlen auf 38 °C) und in Testplättchen (5,1 x 5,1 cm) geschnitten.

Die folgenden Additive werden in den erfindungsgemässen Zusammensetzungen verwendet:

2,2,6,6-Tetramethylpiperidinverbindungen

- A - 8-Acetyl-3-dodecyl-7,7,9,9-tetramethyl-1,3,8-triazaspiro(4,5)-decan-2,4-dion
- B - Bis(2,2,6,6-tetramethyl-4-piperidinyl)sebacat
- C - Bis(1-acetyl-2,2,6,6-tetramethyl-4-piperidinyl)sebacat
- D - Bis(1-benzyl-2,2,6,6-tetramethyl-4-piperidinyl)sebacat
- E - Poly[6-(1,1,3,3-tetramethylbutyl)amino-1,3,5-triazin-2,4-diyl-(2,2,6,6-tetramethyl-4-piperidinyl)-iminohexamethylen-(2,2,6,6-tetramethyl-4-piperidinyl)imino] ( = Verbindung der Formel 79)
- F - N-Butyl-(3,5-di-tert.butyl-4-hyroxybenzyl)-bis-(1,2,2,6,6-pentamethyl-4-piperidinyl)malonat
- G - Polysuccinat des 4-Hydroxy-1-hydroxyethyl-2,2,6,6-tetramethyl-1-piperidin ( = Verbindung der Formel 76).

Zinnverbindungen

- H - Mischung (ca. 9:1) aus Dibutylzinn-bis(isooctyl-thioglycolat)/Butylzinn-tris (isooctylthioglycolat) und Dibutylthiostannonsäure/Dibutylzinnsulfid
- I - Mischung (ca. 3:1) aus Dimethylzinn-bis(2-ethylhexylthioglycolat) und Methylzinn-tris(2-ethylhexylthioglycolat)
- J - Mischung (ca. 2:1) aus Dibutylzinn-di-isotridecyloxid/Dibutylzinn-di-isostearat und Dibutylzinn-bis-(isotridecyl-$\beta$-mercaptopropionat)
- K - Mischung (ca. 2:1) aus Dibutylzinn-bis(2-ethylhexanoat/laurat) und Dibutylzinn-bis(tetradecyl-$\beta$-mercaptopropionat)
- L - Mischung (ca. 3:2) aus Dibutylzinn-bis(2-ethylhexanoat/tetradecanoat) und Dibutylzinn-bis-(isotridecyl-$\beta$-mercaptopropionat)
- M - Mischung (ca. 2:1) aus Dibutylzinn-bis(2-ethylhexanoat/laurat) und Dibutylzinn-bis(isotridecyl-$\beta$-mercaptopropionat)
- N - Mischung (ca. 2:1) aus Dibutylzinn-di-tetradecanoat/Dibutylzinn-di-isotridecyloxid und Dibutylzinn-bis(isotridecyl-$\beta$-mercaptopropionat)

O - Dibutylzinn-bis(methylmaleat).

Weitere Additive

P - 2-(2-Hydroxy-3,5-diamyl-phenyl)benztriazol

Q - 1,6-Hexandiol-bis(3,5-di-tert.-butyl-4-hydroxybenzoat).

Die wie oben beschrieben hergestellten Testplättchen werden folgenden Tests unterworfen:

Test T1: Xenon-Weatherometer-Test (trocken)

Die Proben werden in einem Xenon-Weatherometer bei einer Schwarztafeltemperatur von 60-66 °C und einer relativen Feuchtigkeit von 25-35 % bewittert. In regelmässigen Abständen werden die Proben entnommen und deren Yellowness-Index nach ASTM D-1925-63T bestimmt. Hohe Werte (hohe Vergilbung) bedeuten geringere Stabilität.

Test T2: Xenon-Weatherometer-Test (feucht)

Bewitterung wie im Test T1, jedoch bei relativer Feuchtigkeit von 65-75 % mit folgendem Zyklus: 102 Minuten trocken, 18 Minuten unter Besprühung mit Wasser. Gemessen wird in periodischen Abständen ebenfalls der Yellowness-Index.

Test T3: Arizona-Bewitterung

Die Proben werden im Freien in Arizona der Bewitterung ausgesetzt, bei einem 45° aus der Horizontale nach Süden geneigten Winkel. Der Yellowness-Index wird nach der gleichen Methode gemessen, und zwar nach 9 Monaten (140 000 Langley) und 12 Monaten (181 000 Langley).

Die in diesen Tests erhaltenen Resultate sind den folgenden Tabellen zu entnehmen.

Tabelle 1: nach Test T1

Grundformulierung II

| Stabilisatoren | Stabilisator-konzentration (Teile) | $TiO_2$-Konzentration (Teile) | Yellowness-Index 0 Stunden | 2045 Stunden | 4322 Stunden |
|---|---|---|---|---|---|
| A/J | 1/2 | 5 | 10 | 16 | 21 |
| B/J | 1/2 | 5 | 11 | 14 | 25 |
| C/J/P | 1/2/1 | 5 | 10 | 16 | 23 |
| D/J/P | 1/2/1 | 5 | 11 | 12 | 20 |

Tabelle 2: nach Test T3

Grundformulierung IV

| Stabilisatoren | Stabilisator-konzentration (Teile) | $TiO_2$-Konzentration (Teile) | Yellowness-Index 0 Monate | 9 Monate | 12 Monate |
|---|---|---|---|---|---|
| B/J | 1/2 | 5 | 6 | 6 | 9 |

Tabelle 3: nach Test T2

Grundformulierung V

| Stabilisatoren | Stabilisator-konzentration (Teile) | $TiO_2$-Konzentration (Teile) | Yellowness-Index 0 Stunden | 2500 Stunden | 3500 Stunden |
|---|---|---|---|---|---|
| * B/H | 1/2 | 5 | 5 | 8 | 18 |
| * E/H | 0,3/2 | 5 | 6 | 7 | 12 |
| **Grundformulierung VI** | | | | | |
| B/K | 1/2 | 5 | 4 | 5 | 8 |
| B/K/P | 1/2/1 | 5 | 3 | 3 | 6 |
| E/K | 0,3/2 | 5 | 5 | 3 | 5 |
| E/K/P | 0,3/2/1 | 5 | 4 | 5 | 7 |
| B/J | 1/2 | 5 | 3 | 2 | 4 |
| E/J | 0,3/2 | 5 | 3 | 4 | 8 |
| B/L | 1/2 | 5 | 4 | 5 | 11 |
| B/M | 1/2 | 5 | 3 | 3 | 6 |
| B/N | 1/2 | 5 | 3 | 2 | 6 |
| B/N/Q | 1/2/1 | 5 | 4 | 3 | 5 |

Tabelle 4: nach Test T1

Grundformulierung VII

| Stabilisatoren | Stabilisator-konzentration (Teile) | $TiO_2$-Konzentration (Teile) | Yellowness-Index 0 Std. | 400 Std. | 700 Std. | 1300 Std. | 1900 Std. |
|---|---|---|---|---|---|---|---|
| * F/I | 0,5/2,5 | 0 | 8 | 20 | 40 | >40 | >40 |
| * G/I | 0,5/2,5 | 0 | 8 | 16 | 41 | >40 | >40 |
| F/O | 0,5/2,5 | 0 | 16 | 12 | 11 | 12 | 9 |
| G/O | 0,5/2,5 | 0 | 16 | 4 | 4 | 7 | 7 |

* Vergleichsbeispiel

## Patentansprüche

1. Hart-PVC-Zusammensetzung enthaltend

(A) mindestens eine 2,2,6,6-Tetraalkylpiperidinverbindung, die im Molekül mindestens eine Gruppe der Formel

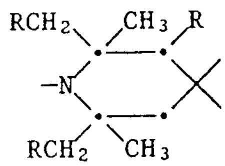

(I)

enthält, worin R Wasserstoff oder Methyl bedeutet, und
(B) mindestens eine Organozinnverbindung der Formeln

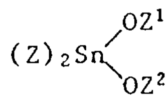

,

$(Z)_2Sn(OOC\text{-}Z^3)_2$ ,

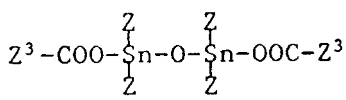

und/oder

$(Z)_mSn(OOC\text{-}CH=CH\text{-}COOZ^4)_{4-m}$ ,

worin Z und $Z^4$ unabhängig voneinander $C_1$-$C_{20}$-Alkyl, $C_3$-$C_{20}$-Alkenyl, Cycloalkyl, Aryl, Alkylaryl oder Aralkyl bedeuten, $Z^1$ $C_{10}$-$C_{30}$-Alkyl oder ein- oder zweifach mit $C_8$-$C_{12}$-Alkyl substituiertes Phenyl ist, $Z^2$ für $Z^1$ oder $-Sn(OZ^1)(Z)_2$ steht, $Z^3$ $C_1$-$C_{30}$-Alkyl, $C_3$-$C_{20}$-Alkenyl, Cycloalkyl, Aryl, Aralkyl oder Alkylaryl und m eine Zahl von 1 bis 3 bedeuten,
wobei die Zusammensetzung keine Bleiverbindungen enthält.

**2.** Zusammensetzung nach Anspruch 1, worin Komponente (A) aus mindestens einer 2,2,6,6-Tetraalkylpiperidinverbindung der Formel

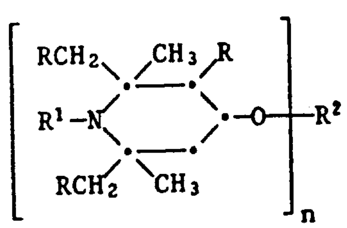

(II)

besteht,
worin n eine Zahl von 1 bis 4, vorzugsweise 1 oder 2 bedeutet, R Wasserstoff oder Methyl bedeutet, $R^1$ Wasserstoff, Oxyl, $C_1$-$C_{18}$ Alkyl, $C_3$-$C_8$ Alkenyl, $C_3$-$C_8$ Alkinyl, $C_7$-$C_{12}$ Aralkyl, $C_1$-$C_8$ Alkanoyl, $C_3$-$C_5$ Alkenoyl, Glycidyl oder eine Gruppe $-CH_2CH(OH)$-Z, worin Z Wasserstoff, Methyl oder Phenyl ist, bedeutet, wobei $R^1$ vorzugsweise $C_1$-$C_{12}$ Alkyl, Allyl, Benzyl, Acetyl oder Acryloyl ist und $R^2$, wenn n 1 ist, Wasserstoff, gegebenenfalls durch ein oder mehrere Sauerstoffatome unterbrochenes $C_1$-$C_{18}$ Alkyl, Cyanethyl, Benzyl, Glycidyl, einen einwertigen Rest einer aliphatischen, cycloaliphatischen, araliphatischen, ungesättigten oder aromatischen Carbonsäure, Carbaminsäure oder Phosphor enthaltenden Säure oder einen einwertigen Silylrest, vorzugsweise einen Rest einer aliphatischen Carbonsäure mit 2

bis 18 C-Atomen, einer cycloaliphatischen Carbonsäure mit 7 bis 15 C-Atomen, einer $\alpha,\beta$-ungesättigten Carbonsäure mit 3 bis 5 C-Atomen oder einer aromatischen Carbonsäure mit 7 bis 15 C-Atomen bedeutet, wenn n 2 ist, $C_1$-$C_{12}$ Alkylen, $C_4$-$C_{12}$ Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2 bis 36 C-Atomen, einer cycloaliphatischen oder aromatischen Dicarbonsäure mit 8 - 14 C-Atomen oder einer aliphatischen, cycloaliphatischen oder aromatischen Dicarbaminsäure mit 8 - 14 C-Atomen bedeutet, wenn n 3 ist, einen dreiwertigen Rest einer aliphatischen, cycloaliphatischen oder aromatischen Tricarbonsäure, einer aromatischen Tricarbaminsäure oder einer Phosphor enthaltenden Säure oder einen dreiwertigen Silylrest bedeutet und wenn n 4 ist, einen vierwertigen Rest einer aliphatischen, cycloaliphatischen oder aromatischen Tetracarbonsäure bedeutet.

**3.** Zusammensetzung nach Anspruch 2, worin die 2,2,6,6-Tetraalkylpiperidinverbindung
Bis(2,2,6,6-tetramethyl-piperidin-4-yl)sebacat,
Bis(1-acetyl-2,2,6,6-tetramethyl-piperidin-4-yl)sebacat,
Bis(1-benzyl-2,2,6,6-tetramethyl-piperidin-4-yl)sebacat oder
N-Butyl-(3,5-di-tert.butyl-4-hydroxybenzyl)-bis-(1,2,2,6,6-pentamethyl-piperidin-4-yl)malonat ist.

**4.** Zusammensetzung nach Anspruch 1, worin Komponente (A) aus mindestens einer 2,2,6,6-Tetraalkylpiperidinverbindung der Formeln

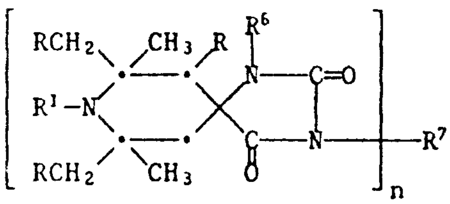

, (VA)

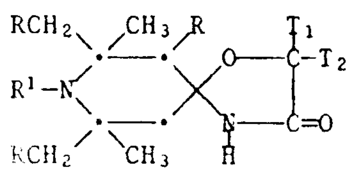

(VB) oder/und

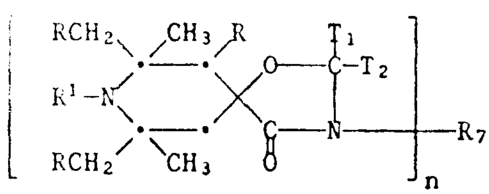

(VC)

besteht,
worin n die Zahl 1 oder 2 bedeutet, R Wasserstoff oder Methyl ist und $R^1$ die in Anspruch 2 angegebenen Bedeutungen hat, $R^6$ Wasserstoff, $C_1$-$C_{12}$ Alkyl, Allyl, Benzyl, Glycidyl oder $C_2$-$C_6$ Alkoxyalkyl ist und $R^7$, wenn n 1 ist, Wasserstoff, $C_1$-$C_{12}$ Alkyl, $C_3$-$C_5$ Alkenyl, $C_7$-$C_9$ Aralkyl, $C_5$-$C_7$ Cycloalkyl, $C_2$-$C_4$ Hydroxyalkyl, $C_2$-$C_6$ Alkoxyalkyl, $C_6$-$C_{10}$ Aryl, Glycidyl oder eine Gruppe der Formel $-(CH_2)_p$-COO-Q oder der Formel $-(CH_2)_p$-O-CO-Q ist, worin p 1 oder 2 und Q $C_1$-$C_4$ Alkyl oder Phenyl sind, wenn n 2 ist, $C_2$-$C_{12}$ Alkylen, $C_4$-$C_{12}$-Alkenylen, $C_6$-$C_{12}$ Arylen, eine Gruppe $-CH_2-CH(OH)-CH_2-O-D-O-CH_2-CH(OH)-CH_2-$, worin D $C_2$-$C_{10}$ Alkylen, $C_6$-$C_{15}$ Arylen, $C_6$-$C_{12}$ Cycloalkylen ist, oder eine Gruppe $-CH_2CH(OZ')CH_2-(OCH_2-CH(OZ')CH_2)_2-$ bedeutet, worin Z' Wasserstoff, $C_1$-$C_{18}$ Alkyl, Allyl, Benzyl, $C_2$-$C_{12}$ Alkanoyl oder Benzoyl ist, $T_1$ und $T_2$ unabhängig voneinander Wasserstoff, $C_1$-$C_{18}$ Alkyl oder gegebenenfalls durch Halogen oder $C_1$-$C_4$ Alkyl substituiertes $C_6$-$C_{10}$ Aryl oder $C_7$-$C_9$ Aralkyl bedeuten oder $T_1$ und $T_2$ zusammen mit dem sie bindenden C-Atom einen $C_5$-$C_{12}$ Cycloalkanring bilden.

**5.** Zusammensetzung nach Anspruch 4, worin die Piperidinverbindung 8-Acetyl-3-dodecyl-7,7,9,9-tetramethyl-1,3,8-triazaspiro[4,5]-dekan-2,4-dion ist.

**6.** Zusammensetzung nach Anspruch 1, worin Komponente (A) mindestens eine polymere Verbindung ist, deren wiederkehrende Struktureinheiten die 2,2,6,6-Tetraalkylpiperidingruppen der Formel I enthalten.

**7.** Zusammensetzung nach Anspruch 6, worin die polymere Verbindung Poly[6-(1,1,3,3-tetramethylbutyl)-amino-1,3,5-triazin-2,4-diyl(2,2,6,6-tetramethyl-piperidin-4-yl)imino-hexamethylen(2,2,6,6-tetramethyl-piperidin-4-yl)imino] oder ein Polysuccinat des 4-Hydroxy-1-hydroxyethyl-2,2,6,6-tetramethylpiperidins ist.

**8.** Zusammensetung nach Anspruch 1, worin Komponente (B) eine Mischung aus mindestens einer Verbindung der Formel

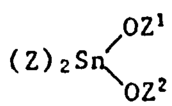

und mindestens einer Verbindung der Formel $(Z)_2Sn(OOC\text{-}Z^3)_2$ ist.

**9.** Zusammensetzung nach Anspruch 1, worin Komponente (B) Dibutylzinn-di-isotridecyloxid, Dibutylzinn-di-isostearat, Dibutylzinn-di-2-ethylhexanoat, Dibutylzinndilaurat, Dibutylzinn-ditetradecanoat oder Mischungen davon darstellt.

**10.** Zusammensetzung nach Anspruch 1, die mindestens eine weitere Organozinnverbindung der Formel

$(Z)_mSn(S\text{-}C_pH_{2p}COOZ^4)_{4-m}$

oder/und

$(Z^5S)_ySn(Z^6)_{4-y}$

enthält, worin Z, $Z^4$, $Z^5$ und $Z^6$ unabhängig voneinander $C_1$-$C_{20}$-Alkyl, Cycloalkyl, Aryl, Alkylaryl oder Aralkyl, und Z und $Z^4$ zusätzlich $C_3$-$C_{20}$-Alkenyl, m und y Zahlen von 1 bis 3 und p eine Zahl von 1 bis 5 bedeuten.

**11.** Zusammensetzung nach Anspruch 10, worin als zusätzliche Organozinnverbindungen Dibutylzinn-bis-(isotridecyl-β-mercaptopropionat), Dibutylzinn-bis(tetradecyl-β-mercaptopropional), Octylzinn-tris-(dodecyl-β-mercaptopropionat) oder Dibutylzinn-bis(2-ethylhexyl-β-mercaptopropionat) oder deren Mischungen eingesetzt wird (werden).

**12.** Zusammensetzung nach Anspruch 1, die zusätzlich bis zu 10 Gew.% Titandioxid, bezogen auf die gesamte Zusammensetzung, enthält.

**13.** Zusammensetzung nach Anspruch 1, die als zusätzliche Stabilisatoren, Benzoate, Benztriazole, Benzophenone, gehinderte Phenole oder Mischungen der genannten Stabilisatoren enthält.

## Claims

**1.** A rigid PVC composition comprising (A) at least one 2,2,6,6-tetraalkylpiperidine compound which in the molecule contains at least one group of the formula

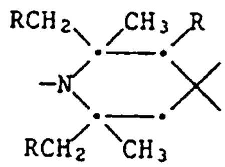

(I)

wherein R is hydrogen or methyl,
and (B) at least one organotin compound of the formulae

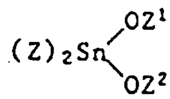

,

$(Z)_2Sn(OOC\text{-}Z^3)_2$ ,

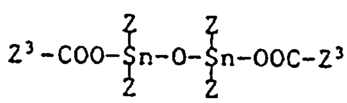

and/or

$(Z)_mSn(OOC\text{-}CH=COOZ^4)_{4-m}$ ,

wherein Z and $Z^4$ independently of one another are $C_1$-$C_{20}$alkyl, $C_3$-$C_{20}$alkenyl, cycloalkyl, aryl, alkylaryl or aralkyl, $Z^1$ is $C_{10}$-$C_{30}$alkyl or phenyl substituted by one or two $C_8$-$C_{12}$alkyl, $Z^2$ is $Z^1$ or $-Sn(OZ^1)(Z)_2$, $Z^3$ is $C_1$-$C_{30}$alkyl, $C_3$-$C_{20}$alkenyl, cycloalkyl, aryl, aralkyl or alkylaryl, and m is a number from 1 to 3, the composition containing no lead compounds.

2. A composition according to claim 1, wherein component (A) comprises at least one 2,2,6,6-tetraalkylpiperidine compound of the formula

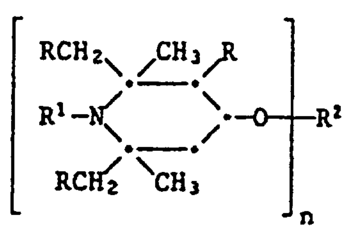

(II),

in which n is a number from 1 to 4, preferably 1 or 2, R is hydrogen or methyl, $R^1$ is hydrogen, oxyl, $C_1$-$C_{18}$alkyl, $C_3$-$C_8$alkenyl, $C_3$-$C_8$alkynyl, $C_7$-$C_{12}$aralkyl, $C_1$-$C_8$alkanoyl, $C_3$-$C_5$alkenoyl, glycidyl or a group $-CH_2CH(OH)\text{-}Z$, with Z being hydrogen, methyl or phenyl, $R^1$ preferably being $C_1$-$C_{12}$alkyl, allyl, benzyl, acetyl or acryloyl, and $R^2$, if n is 1, is hydrogen, $C_1$-$C_{18}$alkyl which may be interrupted by one or more oxygen atoms, cyanoethyl, benzyl, glycidyl, a monovalent radical of an aliphatic, cycloaliphatic, araliphatic, unsaturated or aromatic carboxylic acid, carbamic acid or phosphorus-containing acid or a monovalent silyl radical, preferably a radical of an aliphatic carboxylic acid having 2 to 18 C atoms, a cycloaliphatic carboxylic acid having 7 to 15 C atoms, an $\alpha,\beta$-unsaturated carboxylic acid having 3 to 5 C atoms or an aromatic carboxylic acid having 7 to 15 C atoms, or, if n is 2, $R^2$ is $C_1$-$C_{12}$alkylene, $C_4$-$C_{12}$alkenylene, xylylene, a divalent radical of an aliphatic, cycloaliphatic, araliphatic or aromatic dicarboxylic acid, dicarbamic acid or phosphorus-containing acid or a divalent silyl radical, preferably a radical of an aliphatic dicarboxylic acid having 2 to 36 C atoms, a cycloaliphatic or aromatic dicarboxylic acid having 8 - 14 C atoms or an aliphatic, cycloaliphatic or aromatic dicarbamic acid having 8 to 14 C atoms, or, if n is 3, $R^2$ is a trivalent radical of an aliphatic, cycloaliphatic or aromatic

tricarboxylic acid, an aromatic tricarbamic acid or a phosphorus-containing acid or a trivalent silyl radical, and, if n is 4, $R^2$ is a tetravalent radical of an aliphatic, cycloaliphatic or aromatic tetracarboxylic acid.

**3.** A composition according to claim 2, wherein the 2,2,6,6-tetraalkylpiperidine compound is bis(2,2,6,6-tetramethyl-4-piperidyl) sebacate, bis(1-acetyl-2,2,6,6-tetramethyl-4-piperidyl) sebacate, bis(1-benzyl-2,2,6,6-tetramethyl-4-piperidyl) sebacate or N-butyl-(3,5-di-tert-butyl-4-hydroxybenzyl)-bis-(1,2,2,6,6-pentamethyl-4-piperidyl) malonate.

**4.** A composition according to claim 1, wherein component (A) comprises at least one 2,2,6,6-tetraalkylpiperidine compound of the formulae

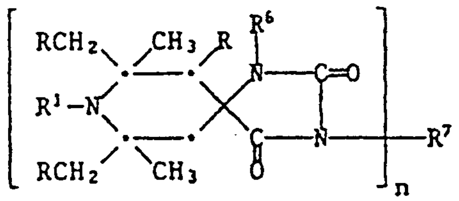 , (VA)

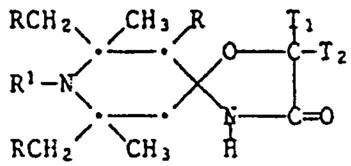 (VB) or/and

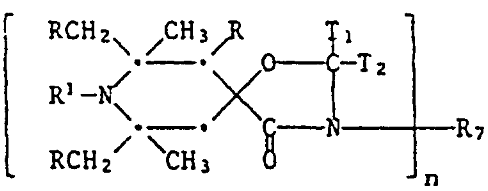 (VC)

in which n is the number 1 or 2, R is hydrogen or methyl and $R^1$ is as defined in claim 2, $R^6$ is hydrogen, $C_1$-$C_{12}$alkyl, allyl, benzyl, glycidyl or $C_2$-$C_6$alkoxyalkyl and $R^7$, if n is 1, is hydrogen, $C_1$-$C_{12}$alkyl, $C_3$-$C_5$alkenyl, $C_7$-$C_9$aralkyl, $C_5$-$C_7$cycloalkyl, $C_2$-$C_4$hydroxyalkyl, $C_2$-$C_6$alkoxyalkyl, $C_6$-$C_{10}$aryl, glycidyl or a group of the formula $-(CH_2)_p-COO-Q$ or of the formula $-(CH_2)_p-O-CO-Q$, wherein p is 1 or 2 and Q is $C_1$-$C_4$alkyl or phenyl, or, if n is 2, $R^7$ is $C_2$-$C_{12}$alkylene, $C_4$-$C_{12}$alkenylene, $C_6$-$C_{12}$arylene, a group $-CH_2-CH(OH)-CH_2-O-D-O-CH_2-CH(OH)-CH_2-$, wherein D is $C_2$-$C_{10}$alkylene, $C_6$-$C_{15}$arylene or $C_6$-$C_{12}$cycloalkylene or a group $-CH_2CH(OZ')CH_2-(OCH_2-CH(OZ')CH_2)_2-$ wherein Z' is hydrogen, $C_1$-$C_{18}$alkyl, allyl, benzyl, $C_2$-$C_{12}$alkanoyl or benzoyl, and $T_1$ and $T_2$ independently of one another are hydrogen, $C_1$-$C_{18}$alkyl or are $C_6$-$C_{10}$aryl or $C_7$-$C_9$aralkyl which are unsubstituted or substituted by halogen or $C_1$-$C_4$alkyl, or $T_1$ and $T_2$, together with the C atom linking them, form a $C_5$-$C_{12}$cycloalkane ring.

**5.** A composition according to claim 4, wherein the piperidine compound is 8-acetyl-3-dodecyl-7,7,9,9-tetramethyl-1,3,8-triazaspiro[4.5]decane-2,4-dione.

**6.** A composition according to claim 1, wherein component (A) is at least one polymeric compound of which the recurring structural units contain the 2,2,6,6-tetraalkylpiperidine groups of the formula 1.

**7.** A composition according to claim 6, wherein the polymeric compound is poly[6-(1,1,3,3-tetramethylbutyl)-amino-1,3,5-triazine-2,4-diyl-(2,2,6,6-tetramethyl-4-piperidyl)imino-hexamethylene-(2,2,6,6-tetramethyl-4-piperidyl)imino] or a polysuccinate of 4-hydroxy-1-hydroxyethyl-2,2,6,6-tetramethylpiperidine.

**8.** A composition according to claim 1, wherein component (B) is a mixture of at least one compound of the formula

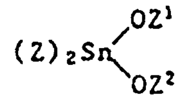

and at least one compound of the formula

$(Z)_2Sn(OOC\text{-}Z^3)_2$.

**9.** A composition according to claim 1, wherein component (B) is dibutyltin di-isotridecyl oxide, dibutyltin di-isostearate, dibutyltin di-2-ethylhexanoate, dibutyltin dilaurate, dibutyltin ditetradecanoate or mixtures thereof.

**10.** A composition according to claim 1, which contains at least one additional organotin compound of the formula

$(Z)_mSn(S\text{-}C_pH_{2p}COOZ^4)_{4-m}$

or/and

$(Z^5S)_ySn(Z^6)_{4-y}$

wherein Z, $Z^4$, $Z^5$ and $Z^6$ independently of one another are $C_1$-$C_{20}$alkyl, cycloalkyl, aryl, alkylaryl or aralkyl, and Z and $Z^4$ are additionally $C_3$-$C_{20}$alkenyl, m and y are numbers from 1 to 3 and p is a number from 1 to 5.

**11.** A composition according to claim 10, wherein the additional organotin compound(s) employed is (are) dibutyltin bis(isotridecyl-$\beta$-mercaptopropionate), dibutyltin bis(tetradecyl-$\beta$-mercaptopropionate), octyltin tris(dodecyl-$\beta$-mercaptopropionate) or dibutyltin bis(2-ethylhexyl-$\beta$-mercaptopropionate) or mixtures thereof.

**12.** A composition according to claim 1, which additionally contains up to 10% by weight of titanium dioxide, based on the overall composition.

**13.** A composition according to claim 1, which contains as additional stabilizers benzoates, benzotriazoles, benzophenones, hindered phenols or mixtures of the stabilizers mentioned.

## Revendications

**1.** Composition de PVC rigide contenant :

A. au moins un composé de 2,2,6,6-tétraalkylpipéridine qui contient dans la molécule au moins un groupe de formule :

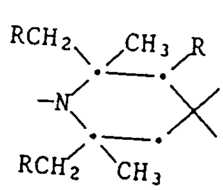

(I)

où R représente l'hydrogène ou le méthyle, et

B. au moins un composé d'organo-étain de formules :

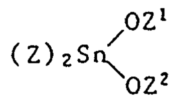

$(Z)_2Sn(OOC\text{-}Z^3)_2$ ,

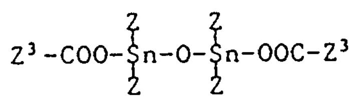

et/ou

$(Z)_mSn(OOC\text{-}CH = CH\text{-}COOZ^4)_{4-m}$ ,

où Z et $Z^4$, indépendamment l'un de l'autre, représentent les alkyle en $C_1$-$C_{20}$, alcényle en $C_3$-$C_{20}$, cycloalkyle, aryle, alkylaryle ou aralkyle, $Z^1$ représente les alkyle en $C_{10}$-$C_{30}$ ou un phényle substitué une ou deux fois par un alkyle en $C_8$-$C_{12}$, $Z^2$ représente $Z^1$ ou $\text{-}Sn(OZ^1)(Z)_2$, $Z^3$ représente les alkyle en $C_1$-$C_{30}$, alcényle en $C_3$-$C_{20}$, cycloalkyle, aryle, aralkyle ou alkylaryle et m va de 1 à 3, la composition ne contenant pas de composés de plomb.

**2.** Composition selon la revendication 1, dans laquelle le composant (A) se compose d'au moins un composé de 2,2,6,6-tétraalkylpipéridine de formule :

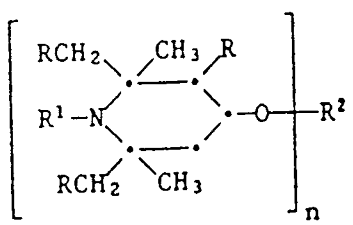

(II)

où n va de 1 à 4, de préférence est 1 ou 2, R représente l'hydrogène ou le méthyle, $R^1$ représente l'hydrogène, les oxyle, alkyle en $C_1$-$C_{18}$, alcényle en $C_3$-$C_8$, alcynyle en $C_3$-$C_8$, aralkyle en $C_7$-$C_{12}$, alcanoyle en $C_1$-$C_8$, alcénoyle en $C_3$-$C_5$, glycidyle ou un groupe $\text{-}CH_2CH(OH)\text{-}Z$, où Z représente l'hydrogène, le méthyle ou le phényle, $R^1$ étant de préférence les alkyle en $C_1$-$C_{12}$, allyle, benzyle, acétyle ou acryloyle et lorsque n vaut 1, $R^2$ représente l'hydrogène, éventuellement un alkyle en $C_1$-$C_{18}$ interrompu par un ou plusieurs atomes d'oxygène, les cyanéthyle, benzyle, glycidyle, un radical monovalent d'un acide carboxylique aliphatique, cycloaliphatique, araliphatique, insaturé ou aromatique, d'un acide carbaminique ou d'un acide contenant du phosphore ou un radical silyle monovalent, de préférence un radical d'un acide carboxylique aliphatique avec 2 à 18 atomes de carbone, d'un acide carboxylique cycloaliphatique avec 7 à 15 atomes de carbone, d'un acide carboxylique $\alpha,\beta$ insaturé avec 3 à 5 atomes de carbone ou d'un acide carboxylique aromatique avec 7 à 15 atomes de carbone, lorsque n vaut 2, il représente les alkylène en $C_1$-$C_{12}$, alcénylène en $C_4$-$C_{12}$, xylylène, un radical bivalent d'un acide dicarboxylique aliphatique, cycloaliphatique, araliphatique ou aromatique, d'un acide dicarbaminique ou d'un acide contenant du phosphore ou un radical silyle bivalent, de préférence un radical d'un acide dicarboxylique aliphatique ou avec 2 à 36 atomes de carbone, d'un acide dicarboxylique cycloaliphatique ou aromatique avec 8 à 14 atomes de carbone ou d'un acide dicarbaminique aliphatique, cycloaliphatique ou aromatique avec 8 à 14 atomes de carbone, lorsque n vaut 3, un radical trivalent d'un acide tricarboxylique aliphatique, cycloaliphatique ou aromatique, d'un acide tricarbaminique aromatique ou d'un acide contenant du phosphore ou un radical silyle trivalent et lorsque n vaut 4, un radical tétravalent d'un acide tétracarboxylique aliphatique, cycloaliphatique ou

aromatique.

**3.** Composition selon la revendication 2, dans laquelle le composé de 2,2,6,6-tétraalkylpipéridine est les sébacate de bis-(2,2,6,6-tétraméthyl-pipéridin-4-yle), sébacate de bis-(1-acétyl-2,2,6,6-tétraméthylpipéridin-4-yle), sébacate de bis-(1-benzyl-2,2,6,6-tétraméthyl-pipéridin-4-yle) ou malonate de N-butyl-(3,5-di-tert-butyl-4-hydroxybenzyl)-bis-(1,2,2,6,6-pentaméthyl-pipéridin-4-yle).

**4.** Composition selon la revendication 1, où le composant (A) se compose d'au moins un composé de 2,2,6,6-tétraalkylpipéridine de formules :

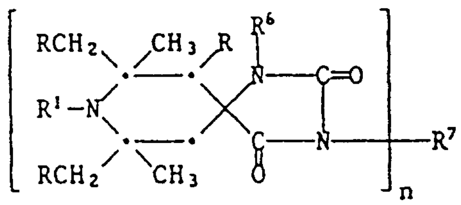

, (VA)

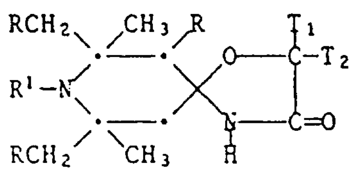

(VB)

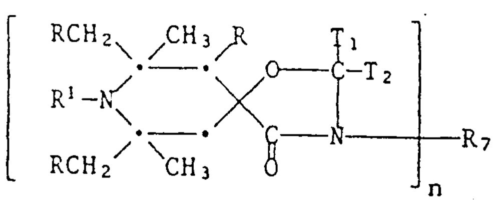

(VC)

où n vaut 1 ou 2, R représente l'hydrogène ou le méthyle et $R^1$ a les significations données dans la revendication 2, $R^6$ représente l'hydrogène, les alkyle en $C_1$-$C_{12}$, allyle, benzyle, glycidyle ou alcoxyalkyle en $C_2$-$C_6$ et lorsque n vaut 1, $R^7$ représente l'hydrogène,les alkyle en $C_1$-$C_{12}$, alcényle en $C_3$-$C_5$, aralkyle en $C_7$-$C_9$, cycloalkyle en $C_5$-$C_7$, hydroxyalkyle en $C_2$-$C_4$, alcoxyalkyle en $C_2$-$C_6$, aryle en $C_6$-$C_{10}$, glycidyle ou un groupe de formule $-(CH_2)_p-COO-Q$ ou de formule $-(CH_2)_p-O-CO-Q$, où p vaut 1 ou 2 et Q représente un alkyle en $C_1$-$C_4$ ou le phényle, lorsque n vaut 2, les alkylène en $C_2$-$C_{12}$, alcénylène en $C_4$-$C_{12}$, arylène en $C_6$-$C_{12}$ , un groupe $-CH_2-CH(OH)-CH_2-O-D-O-CH_2-CH(OH)-CH_2-$, où D représente les alkylène en $C_2$-$C_{10}$, arylène en $C_6$-$C_{15}$, cycloalkylène en $C_6$-$C_{12}$, ou un groupe de formule $-CH_2-CH(OZ')-(OCH_2-CH(OZ')CH_2)_2-$, où Z' représente l'hydrogène, les alkyle en $C_1$-$C_{18}$, allyle, benzyle, alcanoyle en $C_2$-$C_{12}$ ou benzoyle, $T_1$ et $T_2$, indépendamment l'un de l'autre, représentent l'hydrogène, un alkyle en $C_1$-$C_{18}$ ou un aryle en $C_6$-$C_{10}$ éventuellement substitué par un halogène ou un alkyle en $C_1$-$C_4$ ou un aralkyle en $C_7$-$C_9$, ou $T_1$ et $T_2$ ensemble avec l'atome de carbone auquel ils sont liés forment un cycle cycloalcane en $C_5$-$C_{12}$.

**5.** Composition selon la revendication 4, dans laquelle le composé de pipéridine est le 8-acétyl-3-dodécyl-7,7,9,9-tétraméthyl-1,3,8-triazaspiro[4,5]-décan-2,4-dione.

**6.** Composition selon la revendication 1, dans laquelle le composant (A) est au moins un composé polymère, dont les unités de structure récurrentes contiennent des groupes 2,2,6,6-tétraalkylpipéridine de formule I.

**7.** Composition selon la revendication 6, où le composé polymère est le poly[6-(1,1,3,3-tétraméthylbutyl)-amino-1,3,5-triazin-2,4-diyl-(2,2,6,6-tétraméthyl-pipéridin-4-yl)-imino-hexaméthylène-(2,2,6,6-tétraméthyl-pipéridin-4-yl)-imino] ou un polysuccinate de 4-hydroxy-1-hydroxyéthyl-2,2,6,6-tétraméthylpipéridine.

**8.** Composition selon la revendication 1, dans laquelle le composant (B) est un mélange d'au moins un composé de formule

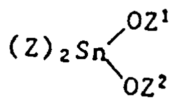

et d'au moins un composé de formule $(Z)_2Sn(OOC\text{-}Z^3)_2$.

**9.** Composition selon la revendication 1, dans laquelle le composant (B) représente l'oxyde diisotridécylique de dibutylétain, le diisostéarate de dibutylétain, le di-2-éthylhexanoate de dibutylétain, le dilaurate de dibutylétain, le ditétradécanoate de dibutylétain ou leurs mélanges.

**10.** Composition selon la revendication 1, qui contient au moins un autre composé d'organo-étain de formules :

$(Z)_mSn(S\text{-}C_pH_{2p}COOZ^4)_{4-m}$

ou/et

$(Z^5S)_ySn(Z)_{4-y}$

où Z, $Z^4$, $Z^5$ et $Z^6$, indépendamment l'un de l'autre, représentent les alkyle en $C_1$-$C_{20}$, cycloalkyle, aryle, alkylaryle ou aralkyle et Z et $Z^4$, de plus, un alcényle en $C_3$-$C_{20}$, m et y les nombres de 1 à 3 et p un nombre de 1 à 5.

**11.** Composition selon la revendication 10, où on utilise en tant que composés d'organo-étain supplémentaires les bis-(isotridécyl-$\beta$-mercaptopropionate) de dibutylétain, bis-(tétradécyl-$\beta$-mercaptopropionate) de dibutylétain, tris-(dodécyl-$\beta$-mercaptopropionates) d'octylétain ou bis-(2-éthylhexyl-$\beta$-mercaptopropionate) de dibutylétain ou leurs mélanges.

**12.** Composition selon la revendication 1, qui contient de plus jusqu'à 10 % en poids d'oxyde de titane, par rapport à la totalité de la composition.

**13.** Composition selon la revendication 1, qui contient en tant que stabilisant supplémentaire les benzoate, benzotriazoles, benzophénones, phénols à empêchement stérique ou les mélanges de stabilisants cités.